# EUROPEAN PATENT APPLICATION

(11) **EP 4 672 803 A1**
(43) Date of publication of application: **31.12.2025**
(21) Application number: 24759610.9
(22) Date of filing: 18.02.2024
(51) Int. Cl.: H04W 24/08

(54) **INFORMATION PROCESSING METHOD AND COMMUNICATION DEVICE**

(30) Priority: 20.02.2023 CN 202310149807; 10.05.2023 CN 202310531549
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Conti, Marco
(86) International application number: PCT/CN2024/077355
(87) International publication number: WO 2024/174933

(57) **Abstract**

Embodiments of this application provide an information processing method and a communication device. The method includes: performing, by a first communication device, a first operation, where the first operation includes at least one of the following: applying at least one of the following to a quality of service QoS flow: a packet set delay budget PSDB, an access network AN PDSB, and a discard timer at a protocol data unit set PDU set level; not applying at least one of the following to the QoS flow: the PSDB, the AN PDSB, and the discard timer at the PDU set level; applying at least one of the following to the QoS flow: a packet delay budget PDB, an AN PDB, and a discard timer at a PDU level; applying at least one of a PSDB and an AN PDSB that are mapped to a QoS identifier; and not applying at least one of the PSDB and the AN PDSB that are mapped to the QoS identifier.

## Description

### CROSS-REFERENCE TO RELATED APPLICATIONS

This application claims priority to Chinese Patent Application No. 202310149807.0, filed in China on February 20, 2023, and Chinese Patent Application No. 202310531549.2, filed in China on May 10, 2023, both of which are incorporated herein by reference in their entireties.

### TECHNICAL FIELD

Embodiments of this application relate to the field of wireless communication technologies, and in particular, to an information processing method and a communication device.

### BACKGROUND

Quality of service (Quality of Service, QoS) at a protocol data unit (Protocol Data Unit, PDU) set (PDU Set) level includes a packet set delay budget (PDU Set Delay Budget, PSDB), a packet set error rate (PDU Set Error Ratio, PSRE), and the like. Correspondingly, QoS parameters mapped to a 5G QoS identifier (5G QoS Identifier, 5QI) may also be extended to include the PSDB. In this case, an application function (application function, AF) may separately request any one or more QoS at a packet switched (Packet Switched, PS) level (PS level).

However, in the related art, the PSDB, the PSER, or PSIHI is an optional QoS parameter for a PDU set. In this case, there is no related solution for how a communication device (for example, a radio access network (Radio Access Network, RAN)) determines whether the PSDB, the PSER, or the PSIHI needs to be applied.

### SUMMARY

Embodiments of this application provide an information processing method and a communication device, to resolve a problem of how a communication device determines whether a PSDB, a PSER, or PSIHI needs to be applied.

To resolve the foregoing technical problem, this application is implemented as follows:
According to a first aspect, an embodiment of this application provides an information processing method. The method includes:
performing, by a first communication device, a first operation, where the first operation includes at least one of the following:
applying at least one of the following to a quality of service QoS flow: a packet set delay budget PSDB, an access network AN PDSB, and a discard timer at a protocol data unit set PDU set level;
not applying at least one of the following to the QoS flow: the PSDB, the AN PDSB, and the discard timer at the PDU set level;
applying at least one of the following to the QoS flow: a packet delay budget PDB, an AN PDB, and a discard timer at a PDU level;
applying at least one of a PSDB and an AN PDSB that are mapped to a QoS identifier; and
not applying at least one of the PSDB and the AN PDSB that are mapped to the QoS identifier.

According to a second aspect, an embodiment of this application provides an information processing method. The method includes:
performing, by a second communication device, a second operation, where the second operation includes one of the following:
binding a QoS flow to a service flow or binding a QoS flow to a target rule;
sending or not sending first information;
determining that first information is present or absent in a context of the QoS flow;
determining that the context of the QoS flow includes or does not include a PSDB information element; and
determining a value of first indication information corresponding to the QoS flow, where
the first information is used to indicate applying a PSDB; and
the first indication information is used to indicate one of the following: applying the PSDB and not applying the PSDB.

According to a third aspect, an embodiment of this application provides an information processing method. The method includes:
performing, by a third communication device, a third operation, where the third operation includes at least one of the following:
determining a QoS identifier;
sending second target information, where the second target information includes at least one of the following: a first QoS identifier or a second QoS identifier, a PSDB, a PSER, PSIHI, first information, first indication information, second indication information, where the first indication information is used to indicate one of the following: applying the PSDB and not applying the PSDB; the second indication information is used to indicate one of the following: applying the PSER and not applying the PSER; and the second indication information is used to indicate one of the following: applying the PSIHI and not applying the PSIHI;
sending a target rule;
accepting or rejecting a requested PSDB, PSER, and/or PSIHI;
determining that one of the following is present or absent in the target rule: the PSDB and a QoS identifier whose mapping information includes the PSDB;
determining that one of the following is present or absent in the target rule: the PSER and a QoS identifier whose mapping information includes the PSER;
determining that one of the following is present or absent in the target rule: the PSIHI and a QoS identifier whose mapping information incudes the PSIHI;
performing a first sub-operation, or performing a second sub-operation;
sending or not sending the first information;
determining that the first information is present or absent in the target rule;
determining that a value of the first indication information is one of the following: a value used to indicate applying the PSDB, and a value used to indicate not applying the PSDB;
determining that the QoS identifier is one of the following: the first QoS identifier and the second QoS identifier;
sending or not sending the PSDB; and
determining that the PSDB is present or absent in the target rule, where
the first information is used to indicate applying the PSDB; and
the first sub-operation includes at least one of the following:
   determining to apply the PSDB or to accept the requested PSDB;
   determining that one of the following is present in the target rule: the PSDB, and the information including the PSDB mapped to the QoS identifier;
   sending the first information, and/or determining that the first information is present in the target rule, where the first information is used to indicate applying the PSDB;
   determining that the first indication information is the value used to indicate applying the PSDB;
   determining that the QoS identifier is the first QoS identifier, where information mapped to the first QoS identifier includes the PSDB; and
   sending the PSDB, and/or determining that the PSDB is present in the target rule; and
   the second sub-operation includes at least one of the following:
      determining not to apply the PSDB or to reject the requested PSDB;
      determining that one of the following is absent in the target policy: the PSDB, and the information including the PSDB mapped to the QoS identifier;
      not sending the first information, and/or determining that the first information is absent in the target rule, where the first information is used to indicate applying the PSDB;
      determining that the value of the first indication information is the value used to indicate not applying the PSDB;
      determining that the QoS identifier is the second QoS identifier, where information mapped to the second QoS identifier does not include the PSDB;
      not sending a PSDB information element; and
      determining that the PSDB information element is absent in the target rule.

According to a fourth aspect, an embodiment of this application provides an information processing method. The method includes:
performing, by a fourth communication device, a fourth operation, where the fourth operation includes one of the following:
obtaining third target information, and determining, based on the third target information, a QoS identifier corresponding to a service flow or a target policy;
not determining, based on the third target information, the QoS identifier corresponding to the service flow or the target policy;
not determining the QoS identifier based on a packet set error rate (PDU Set Error Rate) PSER;
not determining the QoS identifier based on packet set integrated handling information (PDU Set Integrated Handling Information) PSIHI; and
not determining the QoS identifier based on packet set importance, where
the third target information includes at least one of the following: a requested PSDB, a locally configured PSDB, a locally configured PSER, a locally configured PSIHI, and a first threshold; and
information mapped to the QoS identifier does not include the PSDB.

According to a fifth aspect, an embodiment of this application provides a communication device, where the communication device is a first communication device and includes:
a first execution module, configured to perform a first operation, where the first operation includes at least one of the following:
applying at least one of the following to a quality of service QoS flow: a packet set delay budget PSDB, an access network AN PDSB, and a discard timer at a protocol data unit set PDU set level;
not applying at least one of the following to the QoS flow: the PSDB, the AN PDSB, and the discard timer at the PDU set level;
applying at least one of the following to the QoS flow: a packet delay budget PDB, an AN PDB, and a discard timer at a PDU level;
applying at least one of a PSDB and an AN PDSB that are mapped to a QoS identifier; and
not applying at least one of the PSDB and the AN PDSB that are mapped to the QoS identifier.

According to a sixth aspect, an embodiment of this application provides a communication device, where the communication device is a second communication device and includes:
a second execution module, configured for the second communication device to perform a second operation, where the second operation includes one of the following:
binding a QoS flow to a service flow or binding a QoS flow to a target rule;
sending or not sending first information;
determining that first information is present or absent in a context of the QoS flow;
determining that the context of the QoS flow includes or does not include a PSDB information element;
determining that a PSER information element is present or absent in the context of the QoS flow;
determining that a PSIHI information element is present or absent in the context of the QoS flow;
determining a value of first indication information corresponding to the QoS flow;
determining a value of second indication information corresponding to the QoS flow; and
determining a value of third indication information corresponding to the QoS flow, where
the first information is used to indicate applying a PSDB; and
the first indication information is used to indicate one of the following: applying the PSDB and not applying the PSDB.

According to a seventh aspect, an embodiment of this application provides a communication device, where the communication device is a third communication device and includes:
a third execution module, configured to perform a third operation, where the third operation includes at least one of the following:
determining a QoS identifier;
sending second target information, where the second target information includes at least one of the following: a first QoS identifier or a second QoS identifier, a PSDB, a PSER, PSIHI, first information, first indication information, second indication information, and third indication information, where the first indication information is used to indicate one of the following: applying the PSDB and not applying the PSDB; the second indication information is used to indicate one of the following: applying the PSER and not applying the PSER; and the third indication information is used to indicate one of the following: applying the PSIHI and not applying the PSIHI;
sending a target rule;
accepting or rejecting a requested PSDB, PSER, and/or PSIHI;
determining that one of the following is present or absent in the target rule: the PSDB and a QoS identifier whose mapping information includes the PSDB;
determining that one of the following is present or absent in the target rule: the PSER and a QoS identifier whose mapping information includes the PSER;
determining that one of the following is present or absent in the target rule: the PSIHI and a QoS identifier whose mapping information incudes the PSIHI;
performing a first sub-operation, or performing a second sub-operation;
sending or not sending the first information;
determining that the first information is present or absent in the target rule;
determining that a value of the first indication information is one of the following: a value used to indicate applying the PSDB, and a value used to indicate not applying the PSDB;
determining that the QoS identifier is one of the following: the first QoS identifier and the second QoS identifier;
sending or not sending the PSDB; and
determining that the PSDB is present or absent in the target rule, where
the first information is used to indicate applying the PSDB;
the first sub-operation includes at least one of the following:
determining to apply the PSDB or to accept the requested PSDB;
determining that one of the following is present in a target policy: the PSDB, and the information including the PSDB mapped to the QoS identifier;
sending the first information, and/or determining that the first information is present in the target rule, where the first information is used to indicate applying the PSDB;
determining that the first indication information is the value used to indicate applying the PSDB;
determining that the QoS identifier is the first QoS identifier, where information mapped to the first QoS identifier includes the PSDB; and
sending the PSDB, and/or determining that the PSDB is present in the target rule; and
the second sub-operation includes at least one of the following:
   determining not to apply the PSDB or to reject the requested PSDB;
   determining that one of the following is absent in the target policy: the PSDB, and the information including the PSDB mapped to the QoS identifier;
   not sending the first information, and/or determining that the first information is absent in the target rule, where the first information is used to indicate applying the PSDB;
   determining that the value of the first indication information is the value used to indicate not applying the PSDB;
   determining that the QoS identifier is the second QoS identifier, where information mapped to the second QoS identifier does not include the PSDB;
   not sending a PSDB information element; and
   determining that the PSDB information element is absent in the target rule.

According to an eighth aspect, an embodiment of this application provides a communication device, where the communication device is a fourth communication device and includes:
a fourth execution module, configured to perform a fourth operation, where the fourth operation includes one of the following:
obtaining third target information, and determining, based on the third target information, a QoS identifier corresponding to a service flow or a target policy;
not determining, based on the third target information, the QoS identifier corresponding to the service flow or the target policy;
not determining the QoS identifier based on a packet set error rate (PDU Set Error Rate) PSER;
not determining the QoS identifier based on packet set integrated handling information (PDU Set Integrated Handling Information) PSIHI; and
not determining the QoS identifier based on packet set importance, where
the third target information includes at least one of the following: a requested PSDB, a locally configured PSDB, a locally configured PSER, a locally configured PSIHI, and a first threshold; and
information mapped to the QoS identifier does not include the PSDB.

According to a ninth aspect, an embodiment of this application provides a communication device, including a processor, a memory, and a computer program stored in the memory and capable of running on the processor. When the computer program is executed by the processor, the steps of the information processing method according to the first aspect are implemented, or the steps of the information processing method according to the second aspect are implemented, or the steps of the information processing method according to the third aspect are implemented, or the steps of the information processing method according to the fourth aspect are implemented.

According to a tenth aspect, an embodiment of this application provides a computer-readable storage medium. The computer-readable storage medium stores a computer program. When the computer program is executed by a processor, the steps of the information processing method according to the first aspect are implemented, or the steps of the information processing method according to the second aspect are implemented, or the steps of the information processing method according to the third aspect are implemented, or the steps of the information processing method according to the fourth aspect are implemented.

In the embodiments of this application, the first communication device may definitely determine to apply the PSDB, the AN PDSB, and the discard timer at the PDU set level to the QoS flow, or determine not to apply the PSDB, the AN PDSB, and the discard timer at the PDU set level to the QoS flow, so that the accuracy of transmission control over the QoS flow can be improved.

### BRIEF DESCRIPTION OF DRAWINGS

A person of ordinary skill in the art can clearly understand various other advantages and benefits by reading the detailed description of the preferred embodiments below. The accompanying drawings are merely intended to illustrate the preferred embodiments and are not considered as limitations on this application. Throughout the accompanying drawings, same reference numerals represent same components. In the accompanying drawings:
FIG. 1 is a schematic architectural diagram of a wireless communication system according to an embodiment of this application;
FIG. 2 is a flowchart of an information processing method according to an embodiment of this application;
FIG. 3 is a flowchart of another information processing method according to an embodiment of this application;
FIG. 4 is a flowchart of another information processing method according to an embodiment of this application;
FIG. 5 is a flowchart of another information processing method according to an embodiment of this application;
FIG. 6 is a schematic diagram of another information processing method according to an embodiment of this application;
FIG. 7 is a schematic diagram of another information processing method according to an embodiment of this application;
FIG. 8 is a schematic diagram of another information processing method according to an embodiment of this application;
FIG. 9 is a structural diagram of a communication device according to this application;
FIG. 10 is a structural diagram of another communication device according to this application;
FIG. 11 is a structural diagram of another communication device according to this application;
FIG. 12 is a structural diagram of another communication device according to this application; and
FIG. 13 is a structural diagram of another communication device according to this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In embodiments of this application, the term "example", "for example", or the like is used to represent an example, an illustration, or a description. Any embodiment or design scheme described as "example" or "for example" in embodiments of this application should not be construed as being more preferred or advantageous than another embodiment or design scheme. To be precise, the terms such as "example" or "for example" are intended to present a relative concept in a specific manner.

Technologies described in this specification are not limited to a 5th Generation mobile communication (5th generation, 5G) system and a later evolved communication system, and are not limited to an LTE/LTE-Advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems.

The terms "system" and "network" are usually used interchangeably. The CDMA system can implement radio technologies such as CDMA2000 and universal terrestrial radio access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communications, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. The UTRA and E-UTRA are parts of a universal mobile telecommunications system (Universal Mobile Telecommunications System, UMTS). The LTE and more advanced LTE (such as LTE-A) are new UMTS releases that use the E-UTRA. The UTRA, E-UTRA, UMTS, LTE, LTE-A, and GSM are cited from descriptions of documents of an organization named "3rd Generation Partnership Project" (3rd Generation Partnership Project, 3GPP). The CDMA2000 and UMB are cited from descriptions of documents of the organization named "3rd Generation Partnership Project 2" (3GPP2). The technologies described in this specification may be used for the foregoing systems and radio technologies, and may also be used for other systems and radio technologies.

First, the following technical points are described to facilitate better understanding of the embodiments of this application.

QoS at a PDU set level includes a PSDB, a PSER, and the like. Correspondingly, QoS parameters mapped to a 5QI may also be extended to include the PSDB. In this case, an AF may separately request QoS at any one or more PS levels. However, the PSDB is an optional QoS parameter for a PDU set, and can be applied only when a condition is met. Therefore, the following problems need to be resolved:
Problem 1: A PSDB IE may not be sent to a RAN, but is sent to the RAN by using a 5QI. After receiving the 5QI, the RAN does not determine whether it is necessary to apply, to a QoS flow, the PSDB mapped to the 5QI.
Problem 2: A service flow has a QoS requirement at the PDU set level, and a service flow does not have a QoS requirement at the PDU set level. How to perform mapping is unclear.

In view of the foregoing problems, an exemplary embodiment of this application provides the following solutions:
Solution 1: A 5QI is mapped to a PSDB, but whether a RAN applies the PSDB needs to be indicated by additional information, and one of the following is indicated by first information or first indication information: applying the PSDB mapped to the 5QI, and not applying the PSDB mapped to the 5QI. A PSER, PSIHI, and other PDU set QoS are processed in the same way.

The solution 1 may specifically include the following steps:
Step a1: A PCF determines, based on whether a service data flow meets a first threshold and/or whether to apply the PSDB, whether to send the first information, or determines a value of a first indication.

The first information is used to indicate applying, to a QoS flow, the PSDB mapped to the 5QI. In an implementation, the first information is one of the following: a first threshold (such as a threshold corresponding to the PSDB), a second threshold (such as a threshold corresponding to an access network (Access Network, AN) PSDB), information for calculating the first threshold, and information for calculating the second threshold.

A value of the first indication information is one of the following: a first value (for indicating applying the PSDB to the QoS flow) and a second value (for indicating not applying the PSDB to the QoS flow).

Specifically, in a case that the service data flow meets the first threshold and/or that the PSDB is applied, the PCF sends the first information, or determines that the value of the first indication information is the first value (that is, for indicating applying, to the QoS flow, the PSDB mapped to the 5QI); or in a case that the service data flow does not meet the first threshold and/or that the PSDB is not applied, the PCF does not send the first information, or determines that the value of the first information is the second value (that is, for indicating not applying, to the QoS flow, the PSDB mapped to the 5QI).

In an implementation, assuming that the QoS flow to which the PSDB is applied requires the RAN to verify whether the QoS flow really meets a corresponding threshold, if the first information (for example, the first threshold or the second threshold or a first duration) is sent to the RAN along with the 5QI, the PSDB and/or AN PSDB mapped to the 5QI is applied. If the first information is not sent to the RAN along with the 5QI, the PSDB mapped to the 5QI is not applied.

In another implementation, assuming that the QoS flow to which the PSDB is applied does not require the RAN to verify whether the QoS flow really meets the corresponding threshold, that is, there is no case of sending the corresponding threshold to the RAN, the first indication information can be applied for indication.

Step a2: In a case that the first information is received or the value of the first indication information is the first value, the RAN applies, to the QoS flow, the PSDB, the AN PDSB, or a discard timer at a PDU set level that is mapped to the 5QI; or
in a case that the first information is not received or the value of the received first indication information is the second value, the RAN does not apply, to the QoS flow, the PSDB, the AN PDSB, or a discard timer at a PDU set level that is mapped to the 5QI, or applies, to the QoS flow, a PDB, an AN PDB, or a discard timer at a PDU level that is mapped to the 5QI.

Solution 2: One of the following is separately indicated by using a different 5QI: applying a PSDB mapped to a 5QI, and not applying the PSDB mapped to the 5QI.

In the design of a 5QI corresponding to QoS related to a PDU set, a first 5QI and a second 5QI are differentiated, where both the first 5QI and the second 5QI contain QoS parameters (such as PSER and PSIHI) related to the PDU set, but QoS parameters mapped to the first 5QI include the PSDB, and the QoS parameters mapped to the second 5QI do not include the PSDB. It should also be noted that values of other QoS parameters than the PSDB mapped to the first 5QI and the second 5QI may be the same.

The solution 2 may specifically include the following steps:
Step b1: A PCF determines, based on whether a service data flow meets a first threshold and/or whether a PSDB is applied, that a QoS identifier (that is, a QoS indicator) mapped to the service data flow is a first 5QI or a second 5QI.

In a case that the service data flow meets the first threshold and/or that the PSDB is applied, the PCF determines that the QoS indicator corresponding to the service data flow is the first 5QI; or in a case that the service data flow does not meet the first threshold and/or that the PSDB is not applied, the PCF determines that the QoS indicator corresponding to the service data flow is the second 5QI.

Step b2: The RAN applies, based on the first 5QI, the PSDB, an AN PDSB, or a discard timer at a PDU set level that is applied to the first 5QI; or the RAN does not apply, based on the second 5QI, the PSDB, an AN PDSB, or a discard timer at a PDU set level.

Solution 3: QoS parameters mapped to a 5QI do not include other PDU set QoS such as a PSDB, a PSER, and PSIHI.

In a case that a service data flow requires a PSDB, a PCF does not determine, based on PDU set QoS such as the PSDB, PSER, and PSIHI, a QoS indicator (such as a 5QI) corresponding to the service data flow. A RAN applies the PSDB only when a separate PSDB information element (Information Element, IE) is received. The PSER, PSIHI, and other PDU set QoS are processed in the same way.

As can be learned from above, in view of the problem of how the RAN determines whether to apply the PSDB, PSER, and PSIHI to the QoS flow, the foregoing solution 1 can greatly reduce the number of 5QIs compared with the solution 2, while the foregoing solution 2 can reduce impact on the RAN compared with the solution provided in the solution 1, and the foregoing solution 3 is quite different from a QoS mapping method in the related art.

Problem 3: A first threshold is preconfigured in a PCF or an SMF. Because there are a plurality of PSDBs and PDBs, there are also a plurality of corresponding first thresholds. In a case that the AF or a third party requests a PSDB from a communication network for a service flow, it is unclear how to associate and determine a first duration corresponding to the PSDB, and it is also unclear whether to accept the requested PSDB.

For this problem, one solution is to perform association based on flow description information or application description information. When a third-party application determines that its service flow meets the first threshold and expects to guarantee the PSDB, third information (such as the first threshold) may be determined based on a service level agreement (Service Level Agreement, SLA). The third information (such as the first threshold) is stored in a network of an operator. For the stored third information, third-party application description information (such as flow description information) corresponding to the third information is also stored. When the third-party application requests to guarantee the PSDB, flow description information of the service flow is also provided. By matching the third information with the flow description information corresponding to the PSDB, the communication network can determine the first threshold corresponding to the PSDB, determine whether the PSDB meets the first threshold, and determine whether to apply the PSDB.

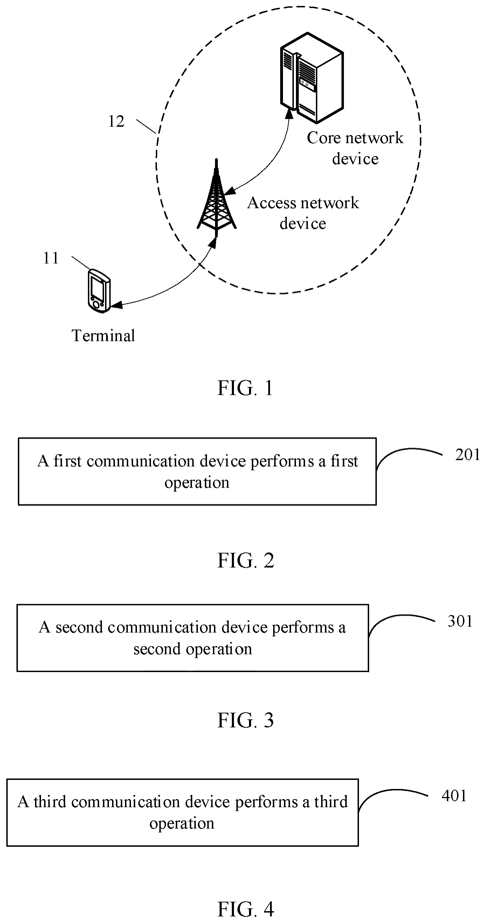

FIG. 1 is a schematic diagram of an architecture of a wireless communication system according to an embodiment of this application. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, a radio access network function, or a radio access network element. The access network device may include a base station, a wireless local area network (Wireless Local Area Network, WLAN) access point (Access Point, AS), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

Optionally, obtaining may be understood as obtaining from a configuration, receiving, receiving by requesting, obtaining by self-learning, obtaining by deducing based on unreceived information, or obtaining after processing based on received information, which may be specifically determined based on actual requirements and is not limited in the embodiments of this application. For example, when specific capability indication information sent by a device is not received, it can be deduced that the device does not support the capability.

Optionally, the term "sending" may include broadcasting, broadcasting in system information, and returning in response to a request.

In an optional embodiment of this application, a communication device may include at least one of the following: a network communication device, a communication network element, and a terminal.

In an embodiment of this application, the communication network element or network communication device may include at least one of the following: a core network element and a radio access network element.

In this embodiment of this application, the core network element (CN element) may include but is not limited to at least one of the following: a core network device, a core network node, a core network function, a core network element, a mobility management entity (Mobility Management Entity, MME), an access and mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and an application function (Application Function).

In this embodiment of this application, the RAN element may include but is not limited to at least one of the following: a radio access network device, a radio access network node, a radio access network function, a radio access network element, a 3GPP radio access network, a non-3GPP radio access network, a centralized unit (Centralized Unit, CU), a distributed unit (Distributed Unit, DU), a base station, an evolved NodeB (evolved NodeB, eNB), a 5G NodeB (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Networks, WLAN) node, and an N3IWF.

A base station may be a base transceiver station (BTS, Base Transceiver Station) in GSM or CDMA, or may be a NodeB (NodeB) in WCDMA, or may be an evolved NodeB (eNB or e-Node B, evolutional NodeB) in LTE or a 5G NodeB (gNB), which is not limited in embodiments of this application.

In an optional embodiment of this application, UE may include one of the following: a terminal device, a terminal device and a card, and a card.

In an optional embodiment of this application, a card may include one of the following: a SIM card, a USIM card, and an eSIM.

In an optional embodiment of this application, a terminal may include a relay supporting a terminal function and/or a terminal supporting a relay function. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or a vehicle-mounted device. It should be noted that a specific type of the terminal is not limited in this embodiment of this application.

In an optional embodiment of this application, a maximum value of a time interval between a reception time of a packet in a packet set and a reception time of a first packet in the packet set includes a maximum value of a time interval between a reception time of a last received packet in the packet set and the reception time of the first packet in the packet set.

In an optional embodiment of this application, the packet set may be referred to as a data set. The packet set includes one or more packets. Optionally, the packet set has a boundary.

In an optional embodiment of this application, the packet set is a concept in a cellular mobile communication network. The packet set may be a segment including one or more packets in a channel (such as a QoS flow, a QoS sub-flow, or a radio bearer) or a set including one or more packets.

In an optional embodiment of this application, the packet may be a PDU packet data unit.

In an optional embodiment of this application, the packet set may be one of the following: a packet data unit set PDU set, an instance of a PDU set, a PDU set category, an instance of a PDU set category, and a data segment or a packet set in a channel (such as a QoS flow, a QoS sub-flow, or a radio bearer).
(1) In one implementation, a type of PDU set may include a plurality of PDU set instances. A type of PDU set may be identified by a PDU set identifier (such as a QoS identifier at a PDU set level). A plurality of different PDU set instances of a same PDU set may be differentiated by packet set sequence numbers (such as PDU set sequence numbers).
(2) In another implementation, a PDU set category may include a plurality of PDU sets. The PDU set is an instance of the PDU set category. A PDU set category may be identified by a PDU set identifier (such as a QoS identifier at the PDU set level). A plurality of different PDU sets of a same PDU set category may be differentiated by packet set sequence numbers (such as PDU set sequence numbers).

In an optional embodiment of this application, the packet set category may be one of the following: a packet data unit set (PDU set), and a channel (such as a QoS flow, a QoS sub-flow, or a radio bearer). One packet set category may correspond to a plurality of packet sets. The packet set is an instance of the packet set category. The packet set category may be identified by a packet set category identifier. The packet set category identifier is, for example, a QoS identifier at the packet set level. In this case, a plurality of packet sets may be differentiated by sequence numbers of the packet sets.

In an implementation, categories of the one or more packet sets are the same or different. Different categories of packet sets may be differentiated by identifiers of the packet sets. Different packet sets of a same category may be differentiated by sequence numbers of the packet sets.

In an optional embodiment of this application, a PDU set includes one or more PDUs, which carry a payload of an information unit generated at an application level (such as a frame or a video slice (video slice)). In some implementations, an application layer requires all PDUs in a PDU set to use corresponding information units. In other implementations, when some PDUs are lost, the application layer can still recover all or part of the information units.

In an optional embodiment of this application, the packet is, for example, a PDU.

The QoS identifier is used to map a group of QoS feature parameters. Therefore, information mapped to the QoS identifier may be referred to as one of the following: a QoS parameter, a QoS feature, and a QoS feature parameter.

In an optional embodiment of this application, the QoS feature parameter may include at least one of the following: a QoS identifier, priority information, a packet delay budget, a packet bit error rate, a maximum data burst, whether the bit rate is guaranteed (Guaranteed Bit Rate, GBR), whether there is a default average window requirement, a default average window, and QoS feature information at the PDU set level.

In an optional embodiment of this application, QoS information includes at least one of the following: a QoS identifier (such as a QCI or a 5QI), a QoS rule, QoS flow description information, QoS context information, and QoS feature parameter information. The QoS flow description information may include QoS feature parameter information, and the QoS context information may include QoS feature parameter information.

In an optional embodiment of this application, a channel may include at least one of the following: a PDU session, a quality of service (Quality of Service, QoS) flow, an evolved packet system (Evolved Packet System, EPS) bearer, a PDP context, a DRB, an SRB, and an Internet Protocol Security (Internet Protocol Security, IPsec) association.

In an optional embodiment of this application, a first threshold may be understood as one of the following: a threshold for a maximum value of a time interval between a reception time of a packet in a packet set and a reception time of a first packet in the packet set, a difference between a PSDB and a first duration, and a condition for applying the PSDB.

In an optional embodiment of this application, a second threshold may be understood as one of the following: a threshold for a maximum value of an interval between a reception time of a packet in a packet set and a reception time of a first packet in the packet set, a difference between an AN PSDB and a first duration, a difference between the AN PSDB and a second duration, and a condition for applying the AN PSDB.

In an optional embodiment of this application, the first duration may be understood as one of the following: a minimum delay budget between a terminal and an anchor gateway for any packet in a packet set, a difference between the PSDB and the first threshold, a difference between the AN PSDB and the first threshold, a difference between the AN PSDB and the second threshold, a condition for applying the PSDB, a condition for applying the AN PSDB, a packet delay budget (Packet Delay Budget, PDB), and an AN PDB.

In an optional embodiment of this application, the first duration may be a delay budget that is at least provided for any PDU in the PDU set. In other words, the delay budget of any PDU in the PDU set is greater than or equal to the first duration (between the terminal and the anchor gateway). In this case, the first threshold may be understood as a value obtained by subtracting the first duration from the PSDB. Because only a time interval between a reception time of a packet in the PDU set and the reception time of the first packet in the PDU set is less than or equal to the first threshold (for example, 6 ms), it is possible for each PDU in the PDU set to have at least a delay budget of the first duration.

It is not difficult to understand that the delay budget of any PDU in the PDU set (for example, between the UE and the anchor gateway) is greater than or equal to the first duration, and/or less than or equal to the PSDB.

In an implementation, the first duration may be a PDB. If the PSDB (for example, 10 ms) is longer than the PDB (for example, 4 ms), a last packet in the PDU set should have at least a delay budget of the PDB, or each PDU in the PDU set should have at least a delay budget of the PDB. Therefore, the first duration can be determined based on the PDB. In this case, the first threshold should be the PSDB minus the PDB. Because only a time interval between a reception time of a packet in the PDU set and the reception time of the first packet in the PDU set is less than or equal to the first threshold (for example, 6 ms), it is possible for each PDU in the PDU set to have at least a delay budget of the PDB.

Similarly, in an optional embodiment of this application, a delay budget of any PDU in the PDU set between the UE and the RAN is greater than or equal to the second duration and less than or equal to the AN PSDB.

It is not difficult to understand that a delay budget of any PDU in the PDU set between the UE and the RAN is greater than or equal to the second duration, and/or less than or equal to the AN PSDB.

In an optional embodiment of this application, the maximum time interval may also be referred to as a maximum duration threshold (Maximum Duration Threshold). The maximum time interval or the maximum duration threshold is one of the following: a threshold for a maximum value of a time interval between a reception time of a packet in a packet set and a reception time of a first packet in the packet set, and a time interval between a reception time of a packet in the packet set and the reception time of the first packet in the packet set needs to be less than or equal to the maximum time interval or the maximum duration threshold.

Optionally, a packet (such as a PDU) in the packet set (such as the PDU set) may be one of the following:
a packet that is in the packet set and that is different from the first packet;
any packet in the packet set; and
a last received packet in the packet set.

In an optional embodiment of this application, the first threshold is one of the following: a maximum value of a time interval between a reception time of a packet in a packet set and a reception time of a first packet in the packet set, a value obtained by subtracting the first duration from the PSDB, a value obtained by subtracting the second duration from the AN PSDB, a value less than the PSDB, a value less than the AN PSDB, a value less than or equal to the PSDB minus the PDB, a value less than or equal to the AN PSDB minus the AN PDB, and a value less than or equal to the AN PSDB minus the second duration.

In an implementation, a maximum value of a time interval between a reception time of a packet in a packet set and a reception time of a first packet in the packet set includes a maximum value of a time interval between a reception time of a last received packet in the packet set and the reception time of the first packet in the packet set.

In an optional embodiment of this application, the second threshold is one of the following: the first threshold, a maximum value of a time interval between a reception time of a packet in a packet set and a reception time of a first packet in the packet set, a value obtained by subtracting the first duration from the AN PSDB, a value obtained by subtracting the second duration from the AN PSDB, a value less than the PSDB, a value less than the AN PSDB, and a value less than or equal to the AN PSDB minus the AN PDB.

In an optional embodiment of this application, the first duration is one of the following: a minimum delay budget between a terminal and an anchor gateway for any packet in a packet set, a value obtained by subtracting the first threshold from the PSDB, a value obtained by subtracting the first threshold from the AN PSDB, a value obtained by subtracting the second threshold from the AN PSDB, the PDB, a value greater than or equal to the PDB, and a value greater than or equal to the PDB and less than or equal to the PSDB.

In an optional embodiment of this application, the second duration is one of the following: a minimum delay budget between a terminal and a radio access network RAN for any packet in a packet set, a value obtained by subtracting the first threshold from the PSDB, a value obtained by subtracting the first threshold from the AN PSDB, a value obtained by subtracting the second threshold from the AN PSDB, a value obtained by subtracting CN delay information from the first duration, the AN PDB, a value greater than or equal to the AN PDB, and a value greater than or equal to the AN PDB and less than or equal to the AN PSDB.

In an optional embodiment of this application, the first threshold is a maximum time interval corresponding to the PSDB and/or the AN PSDB.

In an optional embodiment of this application, the second threshold is a maximum time interval corresponding to the AN PSDB.

In an optional embodiment of this application, the first duration corresponds to the PSDB and/or the AN PSDB.

In an optional embodiment of this application, the second duration corresponds to the AN PSDB.

In an optional embodiment of this application, the first threshold is a maximum duration threshold (Maximum Duration Threshold) for applying the PSDB and/or applying the AN PSDB.

In an optional embodiment of this application, the second threshold is a maximum duration threshold for applying the AN PSDB.

In an optional embodiment of this application, the PSDB is used to indicate a delay budget for transmission of a packet set (such as a PDU set) between a terminal and an anchor gateway (that is, a gateway that terminates an N6 interface) (for example, a time from receiving a first packet in the packet set by a first end (anchor gateway or terminal) to transmitting a last packet to a second end (terminal or anchor gateway) cannot exceed the PSDB). Optionally, the PSDB further includes at least one of the following: a residence time of the packet set at the terminal and a residence time of the packet set at the anchor gateway. The PSDB may also be described as a delay budget for the packet set.

In an optional embodiment of this application, the PSDB is a delay budget between the terminal and the anchor gateway for a group of packets or a packet set.

In an implementation, the PSDB is used to indicate an upper bound of a time for which a PDU set may be delayed between the terminal and the anchor gateway (that is, the gateway that terminates the N6 interface) (that is, a time from transmitting a first packet in the PDU set to transmitting a last packet cannot exceed the PSDB). For a specific QoS identifier (such as a 5QI), the value of the PSDB may be different or the same in an uplink and a downlink.

In an optional embodiment of this application, the PSDB is a delay budget for a group of packets or a packet set.

In an optional embodiment of this application, the AN PSDB may be one of the following:
(1) a delay budget for transmission of a packet set between the terminal and the RAN element (for example, a time from receiving a first packet in the packet set by a third end (RAN or terminal) to transmitting a last packet (or all packets) to a fourth end (terminal or RAN) cannot exceed the AN PSDB); and
(2) a value obtained by subtracting core network delay information (such as a CN PDB, or a delay of a PDU between the RAN and the anchor gateway) from the delay budget for transmission of the packet set between the terminal and the anchor gateway.

Optionally, the PSDB or the AN PSDB further includes at least one of the following: a residence time of the packet set at the terminal, and a residence time of the packet set at the RAN element.

In an implementation, the AN PSDB is used to indicate an upper bound of a time for which a PDU set may be delayed between the terminal and the RAN (that is, a time from transmitting a first packet in the PDU set to transmitting a last packet cannot exceed the AN PSDB). For a specific QoS identifier (such as a 5QI), the value of the AN PSDB may be different or the same in an uplink and a downlink.

In an optional embodiment of this application, the AN PSDB is a delay budget between the terminal and the RAN for a group of packets or a packet set.

In an optional embodiment of this application, the PDB indicates a delay budget for transmission of a packet between the terminal and the anchor gateway (that is, the gateway that terminates the N6 interface). Optionally, the PDB further includes at least one of the following: a residence time of the packet at the terminal, and a residence time of the packet at the anchor gateway. The PDB may also be described as a delay budget for the packet.

The packet delay budget includes the PDB. In an optional embodiment of this application, the PDB is a delay budget for a single packet.

In an implementation, the PDB is used to indicate an upper bound of a time for which a PDU may be delayed between the terminal and the anchor gateway (that is, the gateway that terminates the N6 interface). The PDB may be applied to a downlink packet received by the anchor gateway (such as the UPF) through the N6 interface and an uplink packet sent by the terminal. For a specific QoS identifier (such as a 5QI), the value of the PDB may be the same in an uplink and a downlink.

In an optional embodiment of this application, the PDB or the AN PDB may be one of the following:
(1) a delay budget for transmission of a packet between the terminal and the RAN element; and
(2) a value obtained by subtracting core network delay information (such as a CN PDB, or a delay of a packet between the RAN and the anchor gateway) from the delay budget for transmission of the packet between the terminal and the anchor gateway.

Optionally, the PDB or the AN PDB further includes at least one of the following: a residence time of the packet at the terminal, and a residence time of the packet at the RAN element.

In an optional embodiment of this application, the core network delay budget (such as the CN PDB) is used to indicate a delay budget for transmission of a packet between the RAN and the anchor gateway. The core network delay budget may also be described as the core network delay budget for the packet. Optionally, the core network delay information further includes at least one of the following: a residence time of the packet at the anchor gateway, and a residence time of the packet at the RAN element.

In an embodiment of this application, the NG interface is an interface between the RAN and the CN, and may also be referred to as an S1 interface or an N2 interface, and the naming is not limited.

In an embodiment of this application, a wireless communication network may be at least one of the following: a public network and a non-public network; or a first network may be a non-public network.

In an embodiment of this application, the non-public network is an abbreviation of non public network. The non-public network may be referred to as one of the following: a non-public communication network. The non-public network may include at least one of the following deployment manners: a physical non-public network, a virtual non-public network, and a non-public network implemented on the public network. In an implementation, the non-public network is a closed access group (Closed Access Group, CAG). A CAG may include a group of terminals.

In an embodiment of this application, the non-public network may include or be referred to as a private network. The private network may be referred to as one of the following: a private communication network, a private network, a local area network (Local Area Network, LAN), a virtual private network (Virtual Private Network, PVN), an isolated communication network, a dedicated communication network, or other names. It should be noted that the naming method is not specifically limited in this embodiment of this application.

In an embodiment of this application, the public network is an abbreviation of public network. The public network may be referred to as one of the following: a public communication network or other names. It should be noted that the naming method is not specifically limited in this embodiment of this application.

In an embodiment of this application, a packet size may be referred to as a packet length.

In an embodiment of this application, a packet may be referred to as a data frame.

The following describes an information processing method in an embodiment of this application.

Referring to FIG. 2, an embodiment of this application provides an information disclosure method, which is applied to a first communication device. The first communication device includes, but is not limited to, one of the following: a RAN element and a CN network element. The method includes:
Step 201: The first communication device performs a first operation, where the first operation includes at least one of the following:
applying at least one of the following to a quality of service QoS flow: a packet set delay budget PSDB, an access network AN PDSB, and a discard timer at a protocol data unit set PDU set level;
not applying at least one of the following to the QoS flow: the PSDB, the AN PDSB, and the discard timer at the PDU set level;
applying at least one of the following to the QoS flow: a packet delay budget PDB, an AN PDB, and a discard timer at a PDU level;
applying at least one of a PSDB and an AN PDSB that are mapped to a QoS identifier; and
not applying at least one of the PSDB and the AN PDSB that are mapped to the QoS identifier.

In an implementation, the first communication device may be a RAN.

In an implementation, the QoS identifier may be a 5G QoS identifier (5G QoS Identifier, 5QI).

In an implementation, the applying the PSDB may be applying the PSDB mapped to the QoS identifier, and the not applying the PSDB may be not applying the PSDB mapped to the QoS identifier.

Optionally, the method further includes:
the first communication device obtains first target information, where the first target information includes at least one of the following: first information, first indication information, the QoS identifier, a first QoS identifier, a second QoS identifier, and a PSDB information element; and
that the first communication device performs a first operation includes:
   the first communication device performs the first operation based on the first target information, where
   the first information is used to indicate applying the PSDB;
   the first indication information is used to indicate one of the following: applying the PSDB and not applying the PSDB;
   information mapped to the first QoS identifier includes the PSDB; and
   information mapped to the second QoS identifier does not include the PSDB.

In an implementation, the first communication device obtains first target information from a second communication device (such as an SMF).

In an implementation, the first target information is included in a QoS context of the QoS flow and received.

In an implementation, in a case that the first target information includes first information and/or first indication information, the first target information further includes a QoS identifier. For example, the first target information includes first information and a QoS identifier. For another example, the first target information includes first indication information and a QoS identifier.

Optionally, the first information is first information corresponding to the QoS flow, where the first information corresponding to the QoS flow is used to indicate applying the PSDB to the QoS flow;
and/or
the first indication information is first indication information corresponding to the QoS flow, where the first indication information corresponding to the QoS flow is used to indicate one of the following: applying the PSDB to the QoS flow and not applying the PSDB to the QoS flow.

In an implementation, in a case that the first information and/or the first indication information is included in the QoS context of the QoS flow and received, the first information and/or the first indication information may be first information and/or first indication information corresponding to the QoS flow.

In an implementation, the first information is first information corresponding to a QoS identifier, and the first information corresponding to the QoS identifier is used to indicate applying the PSDB that is mapped to the QoS identifier.

In an implementation, the first indication information is first indication information corresponding to a QoS identifier, and the first indication information corresponding to the QoS identifier is used to indicate one of the following: applying the PSDB that is mapped to the QoS identifier, and not applying the PSDB that is mapped to the QoS identifier.

In a case that the first information and/or the first indication information is received together with the QoS identifier, the first information and/or the first indication information may be first information and/or first indication information corresponding to the QoS identifier.

In an implementation, the QoS identifier is a QoS identifier (such as a 5QI) corresponding to the QoS flow.

Optionally, the applying at least one of the following to a QoS flow: a PSDB, an AN PDSB, and a discard timer at a PDU set level, includes:
in a case that a first condition is met, applying at least one of the following to the QoS flow: the PSDB, the AN PDSB, and the discard timer at the PDU set level, where
the first condition includes at least one of the following:
   first information corresponding to the QoS flow is received, where the first information corresponding to the QoS flow is used to indicate applying the PSDB to the QoS flow;
   a PSDB information element corresponding to the QoS flow is received;
   a value of first indication information corresponding to the QoS flow is a value used to indicate applying the PSDB to the QoS flow, or first indication information corresponding to the QoS flow indicates applying the PSDB; and
   a QoS identifier corresponding to the QoS flow is a first QoS identifier, where information mapped to the first QoS identifier includes the PSDB.

In an implementation, if the first communication device obtains the first information and the QoS identifier (such as the 5QI), the first communication device applies the PSDB and/or AN PSDB mapped to the QoS identifier. In another implementation, if the first communication device does not obtain the first information when obtaining the QoS identifier, the first communication device does not apply the PSDB and/or AN PSDB mapped to the QoS.

In an implementation, the first communication device obtains the QoS identifier and the first indication information, and the value of the first indication information is a value used to indicate applying the PSDB. In this case, the first communication device applies the PSDB and/or AN PSDB mapped to the QoS identifier. In another implementation, the first communication device obtains the QoS identifier and the first indication information, and the value of the first indication information is a value used to indicate not applying the PSDB. In this case, the first communication device does not apply the PSDB and/or AN PSDB mapped to the QoS identifier.

For example, if the first information (for example, a first threshold or a second threshold or a first duration) is also sent together with the QoS identifier (for example, the 5QI) to the RAN, the first communication device applies the PSDB and/or AN PSDB mapped to the QoS identifier; or if no first information is sent together with the 5QI to the RAN, the first communication device does not apply the PSDB mapped to the 5QI.

In an implementation, in a case that the QoS flow to which the PSDB is applied requires the first communication device to verify whether the QoS flow really meets a corresponding threshold, the first information may be used to indicate whether to apply the PSDB to the QoS flow.

In another implementation, in a case that the QoS flow to which the PSDB is applied does not require the first communication device to verify whether the QoS flow really meets a corresponding threshold, that is, there is no case of sending the corresponding threshold to the RAN, the first indication information may be used to indicate whether to apply the PSDB to the QoS flow.

In another implementation, whether to apply the PSDB to the QoS flows may be indicated by different QoS identifiers. The information mapped to the first QoS identifier includes the PSDB, and the information mapped to the second QoS identifier does not include the PSDB. If the first communication device receives the first QoS identifier, the first communication device applies, to the QoS flow, the PSDB mapped to the QoS identifier, or if the first communication device receives the second QoS identifier, the first communication device does not apply, to the QoS flow, the PSDB mapped to the QoS identifier.

In another implementation, the first communication device applies the PSDB only when receiving a separate PSDB information element (Information Element, IE).

Optionally, the not applying at least one of the following to the QoS flow: the PSDB, the AN PDSB, and the discard timer at the PDU set level, and/or the applying at least one of the following to the QoS flow: a PDB, an AN PDB, and a discard timer at a PDU level, includes:
in a case that a second condition is met, not applying at least one of the following to the QoS flow: the PSDB, the AN PDSB, and the discard timer at the PDU set level, and/or applying at least one of the following to the QoS flow: the PDB, the AN PDB, and the discard timer at the PDU level, where
the second condition includes at least one of the following:
   first information corresponding to the QoS flow is not received, where the first information corresponding to the QoS flow is used to indicate applying the PSDB to the QoS flow, or first information corresponding to the QoS flow indicates applying the PSDB;
   a PSDB information element corresponding to the QoS flow is not received;
   a value of first indication information corresponding to the QoS flow is a value used to indicate not applying the PSDB to the QoS flow, or first indication information corresponding to the QoS flow indicates not applying the PSDB; and
   a QoS identifier corresponding to the QoS flow is a second QoS identifier, where information mapped to the second QoS identifier does not include the PSDB.

Optionally, the applying at least one of a PSDB and an AN PDSB that are mapped to a QoS identifier includes:
in a case that a third condition is met, applying at least one of the PSDB and the AN PDSB that are mapped to the QoS identifier, where
the third condition includes at least one of the following:
   first information is received, where the first information is used to indicate applying the PSDB; and
   first indication information indicates applying the PSDB.

Optionally, the not applying at least one of the PSDB and the AN PDSB that are mapped to the QoS identifier includes:
in a case that a fourth condition is met, not applying at least one of the PSDB and the AN PDSB that are mapped to the QoS identifier, where
the fourth condition includes at least one of the following:
   first information is not received, where the first information is used to indicate applying the PSDB; and
   first indication information indicates not applying the PSDB.

Optionally, the applying the PSDB includes applying the PSDB that is mapped to the QoS identifier;
and/or
the not applying the PSDB includes not applying the PSDB that is mapped to the QoS identifier.

Optionally, the first information includes at least one of the following: a first threshold, a second threshold, a first duration, a second duration, information for calculating the first threshold, and information for calculating the second threshold.

In an implementation, the first threshold and the second threshold may be the same.

In another implementation, the first threshold and the second threshold may be different.

In an implementation, the information for calculating the first threshold may include: the first duration, the PSDB, and the PDB.

In an implementation, the information for calculating the second threshold may include: the first duration, the first threshold, the AN PSDB, the AN PDB, and the second duration.

Optionally, the first threshold is one of the following: a maximum value of a time interval between a reception time of a packet in a packet set and a reception time of a first packet in the packet set, a value obtained by subtracting the first duration from the PSDB, a value obtained by subtracting the second duration from the AN PSDB, a value less than the PSDB, a value less than the AN PSDB, a value less than or equal to the PSDB minus the PDB, a value less than or equal to the AN PSDB minus the AN PDB, and a value less than or equal to the AN PSDB minus the second duration;
and/or
the second threshold is one of the following: the first threshold, a maximum value of a time interval between a reception time of a packet in a packet set and a reception time of a first packet in the packet set, a value obtained by subtracting the first duration from the AN PSDB, a value obtained by subtracting the second duration from the AN PSDB, a value less than the PSDB, a value less than the AN PSDB, and a value less than or equal to the AN PSDB minus the AN PDB;
   and/or
the first duration is one of the following: a minimum delay budget between a terminal and an anchor gateway for any packet in a packet set, a value obtained by subtracting the first threshold from the PSDB, a value obtained by subtracting the first threshold from the AN PSDB, a value obtained by subtracting the second threshold from the AN PSDB, the PDB, a value greater than or equal to the PDB, and a value greater than or equal to the PDB and less than or equal to the PSDB;
   and/or
the second duration is one of the following: a minimum delay budget between a terminal and a radio access network RAN for any packet in a packet set, a value obtained by subtracting the first threshold from the PSDB, a value obtained by subtracting the first threshold from the AN PSDB, a value obtained by subtracting the second threshold from the AN PSDB, a value obtained by subtracting CN delay information from the first duration, the AN PDB, a value greater than or equal to the AN PDB, and a value greater than or equal to the AN PDB and less than or equal to the AN PSDB;
   and/or
the first threshold is a maximum time interval corresponding to the PSDB and/or the AN PSDB;
   and/or
the second threshold is a maximum time interval corresponding to the AN PSDB;
   and/or
the first duration corresponds to the PSDB and/or the AN PSDB;
   and/or
the second duration corresponds to the AN PSDB;
   and/or
the first threshold is a maximum duration threshold for applying the PSDB and/or applying the AN PSDB;
   and/or
the second threshold is a maximum duration threshold for applying the AN PSDB, where
the maximum time interval or the maximum duration threshold is a threshold for a maximum value of a time interval between a reception time of a packet in a packet set and a reception time of a first packet in the packet set.

In an implementation, a maximum value of a time interval between a reception time of a packet in a packet set and a reception time of a first packet in the packet set includes a maximum value of a time interval between a reception time of last receiving a packet in the packet set and a reception time of a first packet in the packet set.

Optionally, a packet (such as a PDU) in the packet set (such as the PDU set) may be one of the following:
a packet that is in the packet set and that is different from the first packet;
any packet in the packet set; and
a last received packet in the packet set.

Optionally, the PSDB and PDB are a PSDB and a PDB that are mapped to a same QoS identifier, or a PSDB and a PDB in a same target rule.

Optionally, a prerequisite for applying the PSDB is that the first threshold exists and/or is met.

Optionally, a prerequisite for applying the AN PSDB is that the second threshold exists and/or is met.

Optionally, a prerequisite for applying the AN PSDB is that the first threshold exists and/or is met.

In some embodiments, the first threshold is the same as the second threshold.

Optionally, a prerequisite for applying the PSDB is that a requirement of the first duration exists and/or is met.

Optionally, a prerequisite for applying the AN PSDB is that a requirement of the second duration exists and/or is met.

In an implementation, the first threshold is the same as the second threshold.

In an implementation, the information for calculating the first threshold includes at least one of the following: the first duration, the PSDB, and the PDB;
and/or
in an implementation, the information for calculating the second threshold includes at least one of the following: the first duration, the first threshold, the AN PSDB, the AN PDB, and the second duration.

In this embodiment of this application, the first communication device may definitely determine to apply the PSDB, the AN PDSB, and the discard timer at the PDU set level to the QoS flow, or determine not to apply the PSDB, the AN PDSB, and the discard timer at the PDU set level to the QoS flow, so that the accuracy of transmission control over the QoS flow can be improved. Further, the first communication device may determine, based on whether the first information is received or based on the first indication information, whether to apply the PSDB to the QoS flow, which can reduce the number of 5QIs while ensuring that the first communication device accurately determines whether to apply the PSDB to the QoS flow. Alternatively, the first communication device may determine, based on whether the received 5QI is the first 5QI or the second 5QI, whether to apply the PSDB to the QoS flow, which can reduce signaling overheads while ensuring that the first communication device accurately determines whether to apply the PSDB to the QoS flow. Alternatively, the first communication device may determine, based on whether a PSDB information element is received, whether to apply the PSDB to the QoS flow, which can reduce signaling overheads and the number of 5QIs while ensuring that the first communication device accurately determines whether to apply the PSDB to the QoS flow.

Referring to FIG. 3, an embodiment of this application provides an information processing method, which is applied to a second communication device. The second communication device includes but is not limited to a CN network element (such as an SMF). The method includes:

Step 301: The second communication device performs a second operation, where the second operation includes one of the following:
binding a QoS flow to a service flow or binding a QoS flow to a target rule;
sending or not sending first information;
determining that first information is present or absent in a context of the QoS flow;
determining that the context of the QoS flow includes or does not include a PSDB information element;
determining that a PSER information element is present or absent in the context of the QoS flow;
determining that a PSIHI information element is present or absent in the context of the QoS flow;
determining a value of first indication information corresponding to the QoS flow;
determining a value of second indication information corresponding to the QoS flow; and
determining a value of third indication information corresponding to the QoS flow, where
the first information is used to indicate applying a PSDB;
the first indication information is used to indicate one of the following: applying the PSDB and not applying the PSDB;
the second indication information is used to indicate one of the following: applying a PSER and not applying the PSER; and
the third indication information is used to indicate one of the following: applying PSIHI and not applying the PSIHI.

In an implementation, the second communication device may include a CN network element (such as an SMF).

In an implementation, the target rule may be a policy rule corresponding to the service flow.

Optionally, the binding a QoS flow to a service flow includes: binding the QoS flow to the service flow based on at least one of the following:
existence or nonexistence of first information corresponding to the service flow;
the first indication information corresponding to the service flow;
second indication information corresponding to the service flow;
third indication information corresponding to the service flow;
existence or nonexistence of a PSDB information element corresponding to the service flow; and
existence or nonexistence of a corresponding QoS requirement at a PDU set level in the service flow;
   and/or
the binding a QoS flow to a target rule includes: binding the QoS flow to the target rule based on at least one of the following:
   existence or nonexistence of the first information in the target rule;
   the first indication information in the target rule;
   existence or nonexistence of the PSDB information element in the target rule;
   existence or nonexistence of a QoS requirement at a PDU set level in the target rule;
   presence or absence of the PSER information element in the target rule; and
   presence or absence of the PSIHI information element in the target rule.

Optionally, the binding a QoS flow to a service flow includes: in a case that a fifth condition is met, binding different QoS flows to a first service flow and a second service flow, where
the fifth condition includes at least one of the following:
the first information exists in the first service flow, but the first information does not exist in the second service flow;
a value of the first indication information for the first service flow is different from a value of the first indication information for the second service flow;
the PSDB information element exists in the first service flow, but the PSDB information element does not exist in the second service flow; and
the first service flow has a QoS requirement at a PDU set level, but the second service flow does not have a QoS requirement at the PDU set level;
   and/or
the binding a QoS flow to a target rule includes:
   in a case that a sixth condition is met, binding different QoS flows to a first target rule and a second target rule, where
   the sixth condition includes at least one of the following:
      the first information exists in the first target rule, but the first information does not exist in the second target rule;
      a value of the first indication information in the first target rule is different from a value of the first indication information in the second target rule;
      the PSDB information element exists in the first target rule, but the PSDB information element does not exist in the second target rule; and
      the first target rule has a QoS requirement at a PDU set level, but the second target rule does not have a QoS requirement at the PDU set level.

In an implementation, the QoS requirement at the PDU set level includes at least one of the following: the PSDB, the PSER, the PDU set integrated handling indication (PDU Set Integrated handling indication, PSIHI), and PDU set importance (Importance). The QoS requirement at the PDU set level may be reflected by a QoS identifier to which the QoS requirement at the PDU set level is mapped or by a separate information element.

Optionally, the binding a QoS flow to a service flow or a target rule includes:
in a case that a seventh condition is met, binding a same QoS flow to a third service flow and a fourth service flow, where
the seventh condition includes at least one of the following:
   the first information exists in the third service flow, and the first information exists in the fourth service flow;
   a value of the first indication information for the third service flow is the same as a value of the first indication information for the fourth service flow;
   the PSDB information element exists in the third service flow, and the PSDB information element exists in the fourth service flow; and
   the third service flow and the fourth service flow have a same QoS requirement at a PDU set level;
      and/or
   the binding a QoS flow to a target rule includes:
      in a case that an eighth condition is met, binding a same QoS flow to a third target rule and a fourth target rule, where
      the eighth condition includes at least one of the following:
         the first information exists in the third target rule, and the first information exists in the fourth target rule;
         a value of the first indication information in the third target rule is the same as a value of the first indication information in the fourth target rule;
         the PSDB information element exists in the third target rule, and the PSDB information element exists in the fourth target rule; and
         the third target rule and the fourth target rule have a same QoS requirement at a PDU set level.

Optionally, the determining that first information is present or absent in a context of the QoS flow includes: determining, based on presence or absence of the first information in the target rule, that the first information is present or absent in the context of the QoS flow;
and/or
the determining that the context of the QoS flow includes or does not include a PSDB information element includes: determining, based on presence or absence of the PSDB information element in the target rule, that the context of the QoS flow includes or does not include the PSDB information element;
   and/or
the determining a value of first indication information corresponding to the QoS flow includes: determining, based on a value of the first indication information corresponding to the service flow or a value of the first indication information in the target rule, the value of the first indication information corresponding to the QoS flow;
   and/or
the determining that a PSER information element is present or absent in the context of the QoS flow includes: determining, based on presence or absence of the PSER information element in the target rule, that the PSER information element is present or absent in the context of the QoS flow;
   and/or
the determining that a PSIHI information element is present or absent in the context of the QoS flow includes: determining, based on presence or absence of the PSIHI information element in the target rule, that the PSIHI information element is present or absent in the context of the QoS flow;
   and/or
the determining a value of second indication information corresponding to the QoS flow includes: determining, based on a value of the second indication information corresponding to the service flow or the second indication information in the target rule, the value of the second indication information corresponding to the QoS flow;
   and/or
the determining a value of third indication information corresponding to the QoS flow includes: determining, based on a value of the third indication information corresponding to the service flow or the third indication information in the target rule, the value of the third indication information corresponding to the QoS flow, where
the QoS flow is the QoS flow bound to the target rule.

In an implementation, the target rule may be a policy control and charging (Policy Control and Charging, PCC) rule (PCC rule). A packet filter (packet filter) in the target rule may be used to describe or identify the service flow. Therefore, the information in the target rule may be understood as information corresponding to the service flow. For example, the first information in the target rule may be understood as first information corresponding to the service flow. For example, the first indication information in the target rule may be understood as first indication information corresponding to the service flow.

In an implementation, the target rule is a policy rule corresponding to the service flow.

Optionally, the determining, based on presence or absence of the first information in the target rule, that the first information is present or absent in the context of the QoS flow includes: in a case that the first information is present in the target rule, determining that the context of the QoS flow includes the first information;
and/or
the determining, based on presence or absence of the PSDB information element in the target rule, that the context of the QoS flow includes or does not include the PSDB information element includes: in a case that the PSDB information element is present in the target rule, determining that the PSDB information element is present in the context of the QoS flow;
   and/or
the determining, based on a value of the first indication information in the target rule, the value of the first indication information corresponding to the QoS flow includes: in a case that the first indication information in the target rule is used to indicate applying the PSDB to the service flow, determining that the first indication information corresponding to the QoS flow is used to indicate applying the PSDB to the QoS flow;
the determining, based on presence or absence of the PSER information element in the target rule, that the PSER information element is present or absent in the context of the QoS flow includes: in a case that the PSER information element is present in the target rule, determining that the PSER information element is present in the context of the QoS flow;
   and/or
the determining, based on presence or absence of the PSIHI information element in the target rule, that the PSIHI information element is present or absent in the context of the QoS flow includes: in a case that the PSIHI information element is present in the target rule, determining that the PSIHI information element is present in the context of the QoS flow;
   and/or
the determining, based on a value of the second indication information corresponding to the service flow or the second indication information in the target rule, the value of the second indication information corresponding to the QoS flow includes: in a case that the second indication information corresponding to the service flow is used to indicate applying the PSER to the service flow, determining that the second indication information corresponding to the QoS flow is used to indicate applying the PSER to the QoS flow;
   and/or
the determining, based on a value of the third indication information corresponding to the service flow or the third indication information in the target rule, the value of the third indication information corresponding to the QoS flow includes: in a case that the third indication information corresponding to the service flow is used to indicate applying the PSIHI to the service flow, determining that the third indication information corresponding to the QoS flow is used to indicate applying the PSIHI to the QoS flow.

Optionally, the method further includes:
the second communication device obtains second target information; and
that the second communication device performs a second operation includes:
   the second communication device performs the second operation based on the second target information, where
   the second target information includes at least one of the following: a first QoS identifier or a second QoS identifier, the PSDB, the PSER, the PSIHI, the first information, the first indication information, the second indication information, and the third indication information.

The first indication information is used to indicate one of the following: applying the PSDB and not applying the PSDB.

The first indication information is used to indicate one of the following: applying the PSER and not applying the PSER.

The first indication information is used to indicate one of the following: applying the PSIHI and not applying the PSIHI.

In an implementation, the second target information is included in the target rule and received.

In an implementation, the second communication device may receive the second target information from a third communication device.

According to this embodiment of this application, the second communication device may instruct a first communication device to apply the PSDB, the PSER, or the PSIHI or not to apply the PSDB, the PSER, or the PSIHI. Therefore, the first communication device can accurately determine, based on the instruction of the second communication device, whether to apply the PSDB, the PSER, or the PSIHI, so that the accuracy of transmission control over the QoS flow can be improved.

Referring to FIG. 4, an embodiment of this application provides an information processing method, which is applied to a third communication device. The third communication device includes but is not limited to a CN network element (such as a PCF or an SMF). The method includes:

Step 401: The third communication device performs a third operation, where the third operation includes at least one of the following:
determining a QoS identifier;
sending second target information, where the second target information includes at least one of the following: a first QoS identifier or a second QoS identifier, a PSDB, a PSER, PSIHI, first information, first indication information, second indication information, and third indication information, where the first indication information is used to indicate one of the following: applying the PSDB and not applying the PSDB; the second indication information is used to indicate one of the following: applying the PSER and not applying the PSER; and the third indication information is used to indicate one of the following: applying the PSIHI and not applying the PSIHI;
sending a target rule;
accepting or rejecting a requested PSDB, PSER, and/or PSIHI;
determining that one of the following is present or absent in the target rule: the PSDB and a QoS identifier whose mapping information includes the PSDB;
determining that one of the following is present or absent in the target rule: the PSER and a QoS identifier whose mapping information includes the PSER;
determining that one of the following is present or absent in the target rule: the PSIHI and a QoS identifier whose mapping information incudes the PSIHI;
performing a first sub-operation, or performing a second sub-operation;
sending or not sending the first information;
determining that the first information is present or absent in the target rule;
determining that a value of the first indication information is one of the following: a value used to indicate applying the PSDB, and a value used to indicate not applying the PSDB;
determining that the QoS identifier is one of the following: the first QoS identifier and the second QoS identifier;
sending or not sending the PSDB; and
determining that the PSDB is present or absent in the target rule, where
the first information is used to indicate applying the PSDB;
the first sub-operation includes at least one of the following:
   determining to apply the PSDB or to accept the requested PSDB;
   determining that one of the following is present in the target rule: the PSDB, and the information including the PSDB mapped to the QoS identifier;
   sending the first information, and/or determining that the first information is present in the target rule, where the first information is used to indicate applying the PSDB;
   determining that the first indication information is the value used to indicate applying the PSDB;
   determining that the QoS identifier is the first QoS identifier, where information mapped to the first QoS identifier includes the PSDB; and
   sending the PSDB, and/or determining that the PSDB is present in the target rule; and
   the second sub-operation includes at least one of the following:
      determining not to apply the PSDB or to reject the requested PSDB;
      determining that one of the following is absent in the target policy: the PSDB, and the information including the PSDB mapped to the QoS identifier;
      not sending the first information, and/or determining that the first information is absent in the target rule, where the first information is used to indicate applying the PSDB;
      determining that the value of the first indication information is the value used to indicate not applying the PSDB;
      determining that the QoS identifier is the second QoS identifier, where information mapped to the second QoS identifier does not include the PSDB;
      not sending a PSDB information element; and
      determining that the PSDB information element is absent in the target rule.

In an implementation, the first threshold and the second threshold may be the same.

In another implementation, the first threshold and the second threshold may be different.

In an implementation, the third communication device includes a CN network element, such as a PCF.

In an implementation, the target rule is a policy rule corresponding to the service flow.

In an implementation, the target rule may be a PCC rule.

In an implementation, the sending second target information may include sending the second target information included in the target rule.

Optionally, the first information is first information corresponding to the service flow, where the first information corresponding to the service flow is used to indicate applying the PSDB to the service flow;
or
the first information is first information in the target rule, where the first information in the target rule is used to indicate applying the PSDB to a service flow in the target rule.

Optionally, the method further includes:
the third communication device obtains third target information, where the third target information includes at least one of the following: the requested PSDB, and a first threshold; and
that the third communication device performs a third operation includes:
   the third communication device performs the third operation based on the third target information.

In an implementation, the requested PSDB is the requested PSDB corresponding to the service flow, and is used to determine the PSDB of the service flow in the communication network.

In an implementation, the first threshold is preconfigured in the second communication device.

The QoS identifier (such as a 5QI) is used to indicate a value of a group of QoS information.

In an implementation, the third communication device may obtain the third target information from a fifth communication device.

Optionally, the fifth communication device includes one of the following: an AF and a NEF.

Optionally, in a case that the third target information includes the first threshold, the third target information further includes at least one of the following: application description information corresponding to the first threshold; and flow description information corresponding to the first threshold.

The application description information corresponding to the first threshold is used to identify an application (such as a third-party application) corresponding to the first threshold.

The flow description information corresponding to the first threshold is used to identify an application (such as a third-party application) or service flow corresponding to the first threshold.

Optionally, the determining a QoS identifier includes:
determining that the QoS identifier is one of the following: the first QoS identifier and the second QoS identifier.

Optionally, the performing a first sub-operation includes:
in a case that a ninth condition is met, performing the first sub-operation, where
the ninth condition includes at least one of the following:
   a first threshold corresponding to the requested PSDB exists;
   the first threshold is met;
   the third communication device determines to apply the PSDB; and
   the target rule includes the PSDB.

In an implementation, that the first threshold is met may be referred to as one of the following: the service flow meets the first threshold, the PSDB meets the first threshold corresponding to the service flow, and the PSDB meets the first threshold.

In an implementation, the PSDB is one of the following: the PSDB requested by the AF for the service flow.

In an implementation, that the third communication device determines to apply the PSDB includes one of the following: determining to apply the PSDB to the service flow, where the target rule includes the PSDB.

Optionally, the performing a second sub-operation includes:
in a case that a tenth condition is met, performing the second sub-operation, where
the tenth condition includes at least one of the following:
   a first threshold corresponding to the requested PSDB does not exist;
   the first threshold is not met;
   the third communication device determines not to apply the PSDB; and
   the target rule does not include the PSDB.

In an implementation, that the third communication device determines not to apply the PSDB includes one of the following: determining not to apply the PSDB to the service flow, where the target rule does not include the PSDB.

In an implementation, in a case that the service flow meets the first threshold and/or that it is determined to apply the PSDB, the second communication device may send the first information to the first communication device, or the second communication device sends, to the first communication device, the first indication information for indicating applying the PSDB to the QoS flow, or the second communication device sends the first 5QI to the first communication device, or the second communication device sends the PSDB information element to the first communication device; or in a case that the service flow does not meet the first threshold and/or that it is determined not to apply the PSDB, the second communication device may not send the first information to the first communication device, or the second communication device sends, to the first communication device, the first indication information for indicating not applying the PSDB to the QoS flow, or the second communication device sends a second 5QI to the first communication device, or the second communication device does not send the PSDB information element to the first communication device.

In an implementation, in a case that there is corresponding flow description information or application description information for the first threshold, and that the flow description information of the service flow matches the flow description information corresponding to the first threshold, or in a case that the application of the service flow matches the application description information corresponding to the first threshold, the first threshold may be considered as the first threshold corresponding to the service flow.

Optionally, that the first threshold is met includes:
the requested PSDB is greater than or equal to the first threshold.

Optionally, that the first threshold is met may include: a first threshold corresponding to the requested PSDB exists.

Optionally, that the first threshold is not met includes:
the requested PSDB is less than or equal to the first threshold.

Optionally, that the first threshold is met may include: a first threshold corresponding to the requested PSDB does not exist.

In an implementation, the requested PSDB is a PSDB requested by a fifth communication device.

Optionally, the fifth communication device includes one of the following: an AF and a NEF.

Optionally, the accepting or rejecting a requested PSDB includes:
determining, based on at least one of the following, to accept or reject the requested PSDB:
existence or nonexistence of a first threshold corresponding to the requested PSDB;
the PSDB; and
the first threshold.

Optionally, that a first threshold corresponding to the requested PSDB exists or does not exist includes:
determining, by matching a service flow with flow description information or application description information corresponding to the first information, that the first threshold corresponding to the requested PSDB exists or does not exist.

The service flow may be a service flow corresponding to the requested PSDB.

Optionally, the first information includes at least one of the following: a first threshold, a second threshold, a first duration, a second duration, information for calculating the first threshold, and information for calculating the second threshold.

Optionally, the first threshold is one of the following: a maximum value of a time interval between a reception time of a packet in a packet set and a reception time of a first packet in the packet set, a value obtained by subtracting the first duration from the PSDB, a value obtained by subtracting the second duration from an AN PSDB, a value less than the PSDB, a value less than the AN PSDB, a value less than or equal to the PSDB minus a PDB, a value less than or equal to the AN PSDB minus an AN PDB, and a value less than or equal to the AN PSDB minus the second duration;
and/or
the second threshold is one of the following: the first threshold, a maximum value of a time interval between a reception time of a packet in a packet set and a reception time of a first packet in the packet set, a value obtained by subtracting the first duration from an AN PSDB, a value obtained by subtracting the second duration from the AN PSDB, a value less than the PSDB, a value less than the AN PSDB, and a value less than or equal to the AN PSDB minus an AN PDB;
   and/or
the first duration is one of the following: a minimum delay budget between a terminal and an anchor gateway for any packet in a packet set, a value obtained by subtracting the first threshold from the PSDB, a value obtained by subtracting the first threshold from an AN PSDB, a value obtained by subtracting the second threshold from the AN PSDB, a PDB, a value greater than or equal to the PDB, and a value greater than or equal to the PDB and less than or equal to the PSDB;
   and/or
the second duration is one of the following: a minimum delay budget between a terminal and a radio access network RAN for any packet in a packet set, a value obtained by subtracting the first threshold from the PSDB, a value obtained by subtracting the first threshold from an AN PSDB, a value obtained by subtracting the second threshold from the AN PSDB, a value obtained by subtracting CN delay information from the first duration, an AN PDB, a value greater than or equal to the AN PDB, and a value greater than or equal to the AN PDB and less than or equal to the AN PSDB;
   and/or
the first threshold is a maximum time interval corresponding to the PSDB and/or an AN PSDB;
   and/or
the second threshold is a maximum time interval corresponding to an AN PSDB;
   and/or
the first duration corresponds to the PSDB and/or an AN PSDB;
   and/or
the second duration corresponds to an AN PSDB;
   and/or
the first threshold is a maximum duration threshold for applying the PSDB and/or applying an AN PSDB;
   and/or
the second threshold is a maximum duration threshold for applying an AN PSDB, where
the maximum time interval or the maximum duration threshold is a threshold for a maximum value of a time interval between a reception time of a packet in a packet set and a reception time of a first packet in the packet set.

In an implementation, a maximum value of a time interval between a reception time of a packet in a packet set and a reception time of a first packet in the packet set includes a maximum value of a time interval between a reception time of last receiving a packet in the packet set and a reception time of a first packet in the packet set.

Optionally, a packet (such as a PDU) in the packet set (such as the PDU set) may be one of the following:
a packet that is in the packet set and that is different from the first packet;
any packet in the packet set; and
a last received packet in the packet set.

Optionally, the PSDB and PDB are a PSDB and a PDB that are mapped to a same QoS identifier, or a PSDB and a PDB in a same target rule.

Optionally, a prerequisite for applying the PSDB is that the first threshold exists and/or is met.

Optionally, a prerequisite for applying the AN PSDB is that the second threshold exists and/or is met.

Optionally, a prerequisite for applying the AN PSDB is that the first threshold exists and/or is met.

In some embodiments, the first threshold is the same as the second threshold.

Optionally, a prerequisite for applying the PSDB is that a requirement of the first duration exists and/or is met.

Optionally, a prerequisite for applying the AN PSDB is that a requirement of the second duration exists and/or is met.

In an implementation, the first threshold is the same as the second threshold.

In an implementation, the information for calculating the first threshold includes at least one of the following: the first duration, the PSDB, and the PDB.

In an implementation, the information for calculating the second threshold includes at least one of the following: the first duration, the first threshold, the AN PSDB, the AN PDB, and the second duration.

Optionally, the applying the PSDB includes applying the PSDB that is mapped to the QoS identifier;
and/or
the not applying the PSDB includes not applying the PSDB that is mapped to the QoS identifier.

According to this embodiment of this application, the third communication device may instruct the first communication device to apply the PSDB or not to apply the PSDB. Therefore, the first communication device can accurately determine, based on the instruction of the third communication device, whether to apply the PSDB, so that the accuracy of transmission control over the QoS flow can be improved. Effects of the PSER, PSIHI, and other PDU set QoS are the same.

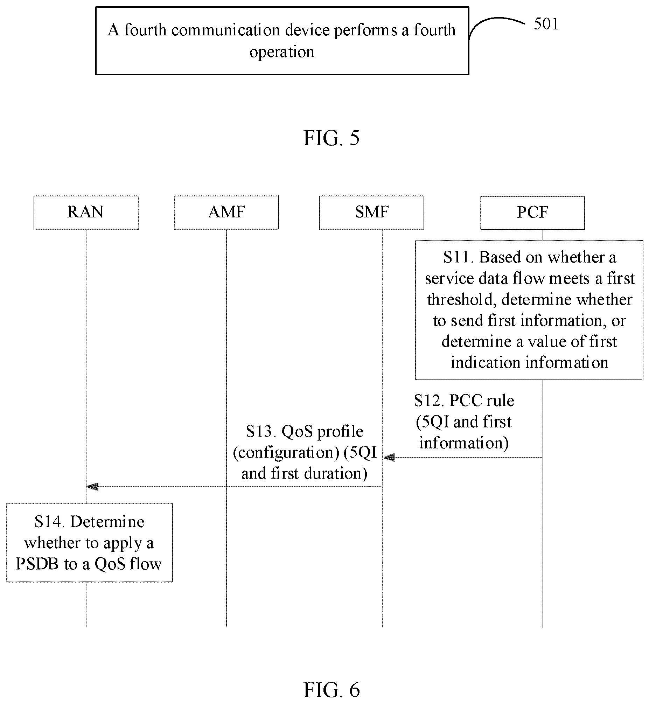

Referring to FIG. 5, an embodiment of this application provides an information processing method, which is applied to a fourth communication device. The fourth communication device includes but is not limited to a CN network element (such as a PCF or an SMF). The method includes:
Step 501: The fourth communication device performs a fourth operation, where the fourth operation includes one of the following:
obtaining third target information, and determining, based on the third target information, a QoS identifier corresponding to a service flow or a target policy;
not determining, based on the third target information, the QoS identifier corresponding to the service flow or the target policy;
not determining the QoS identifier based on a packet set error rate (PDU Set Error Rate, PSER);
not determining the QoS identifier based on packet set integrated handling information (PDU Set Integrated Handling Information, PSIHI);
not determining the QoS identifier based on packet set importance (PDU set importance); and
not determining the QoS identifier by using PDU set QoS, where
the third target information includes at least one of the following: a requested PSDB, a locally configured PSDB, a locally configured PSER, a locally configured PSIHI, and a first threshold; and
information mapped to the QoS identifier does not include the PSDB.

In an implementation, the QoS information mapped to the QoS identifier does not include PDU set QoS (such as the PSDB, the PSER, or the PSIHI). The QoS identifier may be a standardized or predefined QoS identifier.

In an implementation, the target policy is, for example, a PCC rule.

The QoS information mapped to the QoS identifier does not include PDU set QoS (such as the PSDB, the PSER, or the PSIHI). The QoS identifier may be a standardized or predefined QoS identifier.

Not determining the QoS identifier based on the PSDB includes: in a case that the PSDB is determined and/or the PSDB is obtained, not using the PSDB to determine the QoS identifier;
not determining the QoS identifier based on the PSER includes: in a case that the PSER is determined and/or the PSER is obtained, not using the PSER to determine the QoS identifier; and
not determining the QoS identifier based on the PSIHI includes: in a case that the PSIHI is determined and/or the PSIHI is obtained, not using the PSIHI to determine the QoS identifier.

In an implementation, the requested PSDB, such as a PSDB requested by an AF, is sent directly or indirectly by the AF to the fourth communication device.

In an implementation, the PSER may be a requested PSER (such as a PSER requested by the AF, which is directly or indirectly sent by the AF to the fourth communication device) or a PSER locally configured by the fourth communication device.

In an implementation, the PSIHI may be requested PSIHI (such as PSIHI requested by the AF, which is directly or indirectly sent by the AF to the fourth communication device) or PSIHI locally configured by the fourth communication device.

Optionally, the not determining, based on the third target information, the QoS identifier corresponding to the service flow or the target policy includes at least one of the following:
in a case that the third target information includes the requested PSDB or the locally configured PSDB, not determining, based on the requested PSDB or the locally configured PSDB, the QoS identifier corresponding to the service flow or the target policy;
in a case that the third target information includes the PSER, and/or that it is determined to apply the PSER, not determining, based on the PSER, the QoS identifier corresponding to the service flow or the target policy; and
in a case that the third target information includes the PSIHI, and/or that it is determined to apply the PSIHI, not determining, based on the PSIHI, the QoS identifier corresponding to the service flow or the target policy.

Optionally, the not determining the QoS identifier based on a PSER includes: in a case that the PSER is obtained, and/or that it is determined to apply the PSER, not determining the QoS identifier based on the PSER.

Optionally, the not determining the QoS identifier based on PSIHI includes: in a case that the PSIHI is obtained, and/or that it is determined to apply the PSIHI, not determining the QoS identifier based on the PSIHI.

In an implementation, the target policy may be, for example, a PCC rule.

In other words, the 5QI is not mapped based on the PSDB. In this method, a RAN applies the PSDB only when a separate PSDB information element (Information Element, IE) is received.

In an implementation, the requested PSDB may be a PSDB sent by a fifth communication device (such as a PSDB requested for the service flow). Optionally, the fifth communication device includes one of the following: an AF and a NEF.

According to this embodiment of this application, for an optional QoS parameter such as the PSDB, the fourth communication device may not apply the PSDB, the PSER, or the PSIHI to map the QoS identifier, thereby reducing the number of QoS identifiers, and adapting to scenarios in which the PSDB is applied or not applied. Effects of the PSER, PSIHI, and other PDU set QoS are the same.

The following describes the embodiments of this application by using examples with reference to different application scenarios.

In an application scenario 1 of an embodiment of this application, a process of indicating whether a RAN applies a PSDB to a QoS flow by using first information or first indication information is mainly described. As shown in FIG. 6, the method includes the following steps.

Step S11: Based on whether a service data flow meets a first threshold and/or whether to apply a PSDB, a PCF determines whether to send first information, or determines a value of first indication information.

The first information is used to indicate applying the PSDB to a QoS flow. In an implementation, the first information is one of the following: a first threshold (such as a threshold corresponding to the PSDB), a second threshold (such as a threshold corresponding to an AN PSDB), information for calculating the first threshold, and information for calculating the second threshold.

In an implementation, the value of the first indication information is one of the following: a first value (for indicating applying the PSDB to the QoS flow) and a second value (for indicating not applying the PSDB to the QoS flow).

In an implementation, the PSDB is a PSDB mapped to a 5QI.

Based on whether the service data flow meets the first threshold and/or whether to apply the PSDB, the PCF determines whether to send the first information, or determines the value of the first indication information. For example, in a case that the service data flow meets the first threshold and/or that the PSDB is applied, the PCF sends the first information, or determines that the value of the first indication information is the first value (that is, for indicating applying, to the QoS flow, the PSDB mapped to the 5QI); or in a case that the service data flow does not meet the first threshold and/or that the PSDB is not applied, the PCF does not send the first information, or determines that the value of the first information is the second value (that is, for indicating not applying, to the QoS flow, the PSDB mapped to the 5QI).

Step S12: The PCF sends a PCC rule (nPCC rule) to an SMF.

Optionally, the PCC rule includes second information, and the second information includes at least one of the following: the PSDB, or the 5QI to which the PSDB is mapped, the first information, and the first indication information.

Step S13: According to the PCC rule, the SMF sends a QoS profile to a RAN through an AMF.

Optionally, the QoS profile includes the second information.

Step S14: Based on the second information, the RAN determines whether to apply the PSDB to the QoS flow.

Step S14 may include at least one of the following:
in a case that the first information is received or the value of the first indication information is the first value, the RAN applies the PSDB, the AN PDSB, or a discard timer at a PDU set level to the QoS flow; or
in a case that the first information is not received or the value of the received first indication information is the second value, the RAN does not apply the PSDB, the AN PDSB, or a discard timer at a PDU set level to the QoS flow, or applies a PDB, an AN PDB, or a discard timer at a PDU level.

The PSDB is the PSDB mapped to the 5QI, the AN PSDB is an AN PSDB corresponding to the PSDB mapped to the 5QI, the PDB is a PDB mapped to the 5QI, and the AN PDB is an AN PDB corresponding to the PDB mapped to the 5QI.

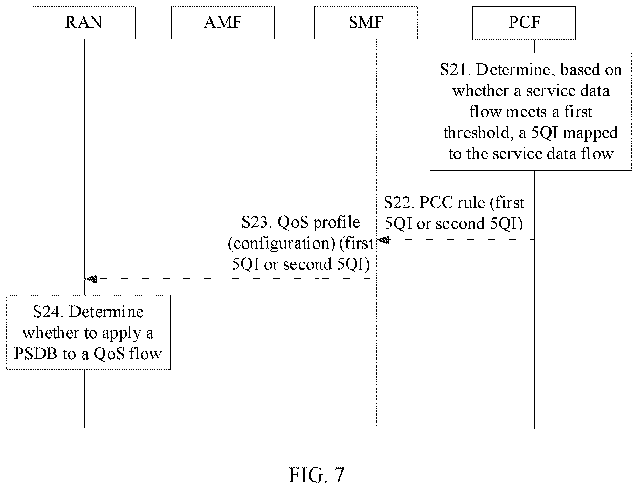

In an application scenario 2 of an embodiment of this application, a process of indicating whether to apply a PSDB to a QoS flow by using different 5QIs is mainly described. As shown in FIG. 7, the method includes the following steps.

Step S21: A PCF determines, based on whether a service data flow meets a first threshold and/or whether to apply a PSDB, a 5QI mapped to the service data flow.

The PCF determines that a QoS indicator corresponding to the service data flow is one of the following: a first 5QI and a second 5QI. QoS parameters mapped to the first 5QI include the PSDB, and QoS parameters mapped to the second 5QI do not include the PSDB.

For step S21, in a case that the service data flow meets the first threshold and/or that the PSDB is applied, the PCF determines that the QoS indicator corresponding to the service data flow is the first 5QI; or in a case that the service data flow does not meet the first threshold and/or that the PSDB is not applied, the PCF determines that the QoS indicator corresponding to the service data flow is the second 5QI.

Step S22: The PCF sends a PCC rule to an SMF.

Optionally, the PCC rule includes fifth information, and the fifth information includes the first 5QI or the second 5QI.

Step S23: According to the PCC rule, the SMF sends a QoS profile to a RAN through an AMF.

Optionally, the QoS profile includes the fifth information.

Step S24: Based on the fifth information, the RAN determines whether to apply the PSDB to a QoS flow.

In step S24, the RAN applies the PSDB, an AN PDSB, or a discard timer at a PDU set level based on the first 5QI; or the RAN does not apply the PSDB, an AN PDSB, or a discard timer at a PDU set level based on the second 5QI.

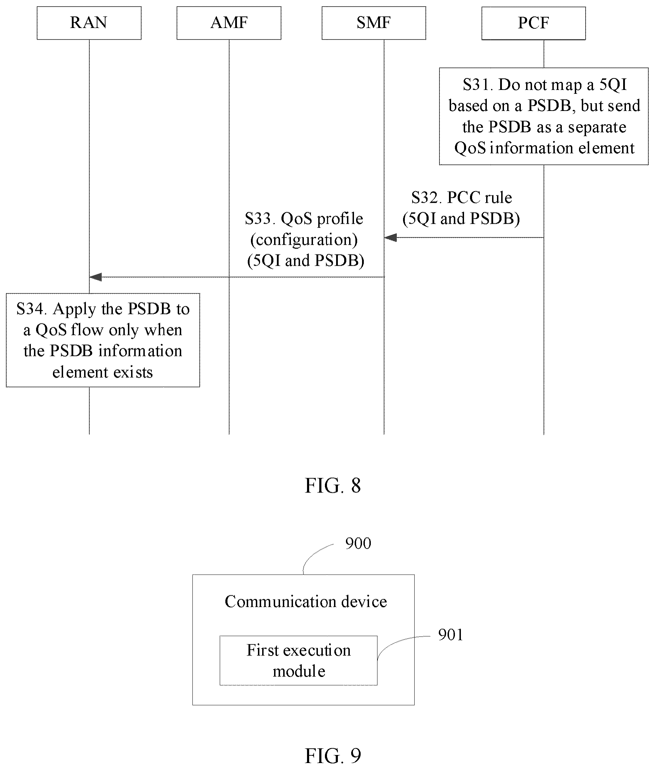

In an application scenario 3 of an embodiment of this application, a process of applying a PSDB only in a case that QoS parameters mapped to a 5QI do not include the PSDB and that a RAN receives a separate PSDB IE, is mainly described. As shown in FIG. 8, the method includes the following steps.

Step S31: In a case that a PCF determines that a service data flow corresponds to a QoS indicator (such as a 5QI), the PCF does not map the 5QI based on PDU set QoS (including at least one of the following: a PSDB, a PSER, and PSIHI), that is, QoS parameters mapped to the 5QI do not include PDU set QoS (including at least one of the following: the PSDB, the PSER, and the PSIHI). The PSDB, the PSER, the PSIHI, and/or PDU set importance is sent as a separate QoS information element.

Step S32: The PCF sends a PCC rule to an SMF.

Optionally, the PCC rule includes third information, and the third information includes at least one of the following: the 5QI and PDU set QoS (including at least one of the following: the PSDB, the PSER, and the PSIHI). The PDU set QoS (including at least one of the following: the PSDB, the PSER, and the PSIHI) is not mapped to the 5QI.

Step S33: According to the PCC rule, the SMF sends a QoS profile to a RAN through an AMF.

Optionally, the QoS profile includes the third information.

Step S34: The RAN applies the PSDB to a QoS flow only when a separate PSDB information element is received.

The RAN applies the PSER to the QoS flow only when a separate PSER information element is received.

The RAN applies the PSIHI to the QoS flow only when a separate PSIHI information element is received.

As can be learned from above, in view of the problem of how the RAN determines whether to apply the PSDB to the QoS flow, the solution provided in the foregoing scenario 1 can greatly reduce the number of 5QIs compared with the solution provided in the scenario 2, while the solution provided in the foregoing scenario 2 can reduce impact on the RAN compared with the solution provided in the scenario 1, and the solution provided in the foregoing scenario 3 is quite different from a QoS mapping method in the related art.

FIG. 9 is a structural diagram of a communication device according to an embodiment of this application. The communication device is a first communication device. As shown in FIG. 9, the communication device 900 includes:
a first execution module 901, configured to perform a first operation, where the first operation includes at least one of the following:
applying at least one of the following to a quality of service QoS flow: a packet set delay budget PSDB, an access network AN PDSB, and a discard timer at a protocol data unit set PDU set level;
not applying at least one of the following to the QoS flow: the PSDB, the AN PDSB, and the discard timer at the PDU set level;
applying at least one of the following to the QoS flow: a packet delay budget PDB, an AN PDB, and a discard timer at a PDU level;
applying at least one of a PSDB and an AN PDSB that are mapped to a QoS identifier; and
not applying at least one of the PSDB and the AN PDSB that are mapped to the QoS identifier.

Optionally, the apparatus further includes:
a first obtaining module, configured to obtain first target information, where the first target information includes at least one of the following: first information, first indication information, the QoS identifier, a first QoS identifier, a second QoS identifier, and a PSDB information element; and
the first execution module is specifically configured to:
   perform the first operation based on the first target information, where
   the first information is used to indicate applying the PSDB;
   the first indication information is used to indicate one of the following: applying the PSDB and not applying the PSDB;
   information mapped to the first QoS identifier includes the PSDB; and
   information mapped to the second QoS identifier does not include the PSDB.

Optionally, the first information is first information corresponding to the QoS flow, where the first information corresponding to the QoS flow is used to indicate applying the PSDB to the QoS flow;
and/or
the first indication information is first indication information corresponding to the QoS flow, where the first indication information corresponding to the QoS flow is used to indicate one of the following: applying the PSDB to the QoS flow and not applying the PSDB to the QoS flow.

Optionally, the applying at least one of the following to a QoS flow: a PSDB, an AN PDSB, and a discard timer at a PDU set level, includes:
in a case that a first condition is met, applying at least one of the following to the QoS flow: the PSDB, the AN PDSB, and the discard timer at the PDU set level, where
the first condition includes at least one of the following:
   first information corresponding to the QoS flow is received, where the first information corresponding to the QoS flow is used to indicate applying the PSDB to the QoS flow;
   a PSDB information element corresponding to the QoS flow is received;
   a value of first indication information corresponding to the QoS flow is a value used to indicate applying the PSDB to the QoS flow, or first indication information corresponding to the QoS flow indicates applying the PSDB; and
   a QoS identifier corresponding to the QoS flow is a first QoS identifier, where information mapped to the first QoS identifier includes the PSDB.

Optionally, the not applying at least one of the following to the QoS flow: the PSDB, the AN PDSB, and the discard timer at the PDU set level, and/or the applying at least one of the following to the QoS flow: a PDB, an AN PDB, and a discard timer at a PDU level, includes:
in a case that a second condition is met, not applying at least one of the following to the QoS flow: the PSDB, the AN PDSB, and the discard timer at the PDU set level, and/or applying at least one of the following to the QoS flow: the PDB, the AN PDB, and the discard timer at the PDU level, where
the second condition includes at least one of the following:
   first information corresponding to the QoS flow is not received, where the first information corresponding to the QoS flow is used to indicate applying the PSDB to the QoS flow, or first information corresponding to the QoS flow indicates applying the PSDB;
   a PSDB information element corresponding to the QoS flow is not received;
   a value of first indication information corresponding to the QoS flow is a value used to indicate not applying the PSDB to the QoS flow, or first indication information corresponding to the QoS flow indicates not applying the PSDB; and
   a QoS identifier corresponding to the QoS flow is a second QoS identifier, where information mapped to the second QoS identifier does not include the PSDB.

Optionally, the applying at least one of a PSDB and an AN PDSB that are mapped to a QoS identifier includes:
in a case that a third condition is met, applying at least one of the PSDB and the AN PDSB that are mapped to the QoS identifier, where
the third condition includes at least one of the following:
   first information is received, where the first information is used to indicate applying the PSDB; and
   first indication information indicates applying the PSDB.

Optionally, the not applying at least one of the PSDB and the AN PDSB that are mapped to the QoS identifier includes:
in a case that a fourth condition is met, not applying at least one of the PSDB and the AN PDSB that are mapped to the QoS identifier, where
the fourth condition includes at least one of the following:
   first information is not received, where the first information is used to indicate applying the PSDB; and
   first indication information indicates not applying the PSDB.

Optionally, the applying the PSDB includes applying the PSDB that is mapped to the QoS identifier;
and/or
the not applying the PSDB includes not applying the PSDB that is mapped to the QoS identifier.

Optionally, the first information includes at least one of the following: a first threshold, a second threshold, a first duration, a second duration, information for calculating the first threshold, and information for calculating the second threshold.

Optionally, the first threshold is one of the following: a maximum value of a time interval between a reception time of a packet in a packet set and a reception time of a first packet in the packet set, a value obtained by subtracting the first duration from the PSDB, a value obtained by subtracting the second duration from the AN PSDB, a value less than the PSDB, a value less than the AN PSDB, a value less than or equal to the PSDB minus the PDB, a value less than or equal to the AN PSDB minus the AN PDB, and a value less than or equal to the AN PSDB minus the second duration;
and/or
the second threshold is one of the following: the first threshold, a maximum value of a time interval between a reception time of a packet in a packet set and a reception time of a first packet in the packet set, a value obtained by subtracting the first duration from an AN PSDB, a value obtained by subtracting the second duration from the AN PSDB, a value less than the PSDB, a value less than the AN PSDB, and a value less than or equal to the AN PSDB minus an AN PDB;
   and/or
the first duration is one of the following: a minimum delay budget between a terminal and an anchor gateway for any packet in a packet set, a value obtained by subtracting the first threshold from the PSDB, a value obtained by subtracting the first threshold from an AN PSDB, a value obtained by subtracting the second threshold from the AN PSDB, a PDB, a value greater than or equal to the PDB, and a value greater than or equal to the PDB and less than or equal to the PSDB;
   and/or
the second duration is one of the following: a minimum delay budget between a terminal and a radio access network RAN for any packet in a packet set, a value obtained by subtracting the first threshold from the PSDB, a value obtained by subtracting the first threshold from an AN PSDB, a value obtained by subtracting the second threshold from the AN PSDB, a value obtained by subtracting CN delay information from the first duration, an AN PDB, a value greater than or equal to the AN PDB, and a value greater than or equal to the AN PDB and less than or equal to the AN PSDB;
   and/or
the first threshold is a maximum time interval corresponding to the PSDB and/or the AN PSDB;
   and/or
the second threshold is a maximum time interval corresponding to the AN PSDB;
   and/or
the first duration corresponds to the PSDB and/or the AN PSDB;
   and/or
the second duration corresponds to the AN PSDB;
   and/or
the first threshold is a maximum duration threshold for applying the PSDB and/or applying the AN PSDB;
   and/or
the second threshold is a maximum duration threshold for applying the AN PSDB, where
the maximum time interval or the maximum duration threshold is a threshold for a maximum value of a time interval between a reception time of a packet in a packet set and a reception time of a first packet in the packet set.

In an implementation, a maximum value of a time interval between a reception time of a packet in a packet set and a reception time of a first packet in the packet set includes a maximum value of a time interval between a reception time of last receiving a packet in the packet set and a reception time of a first packet in the packet set.

In this embodiment of this application, the communication device 900 can implement each process implemented in the method embodiment shown in FIG. 2 of this application, with the same beneficial effect achieved. To avoid repetition, details are not described herein again.

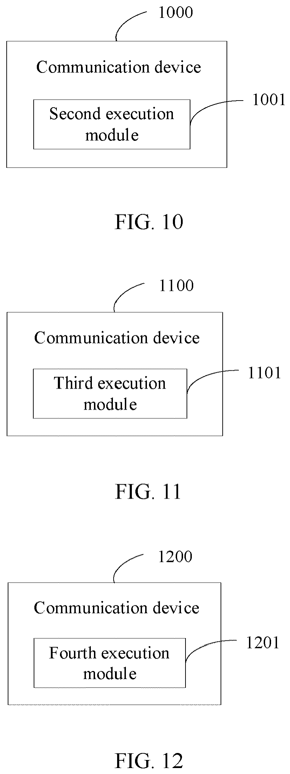

FIG. 10 is a structural diagram of a communication device according to an embodiment of this application. The communication device is a second communication device. As shown in FIG. 10, the communication device 1000 includes:
a second execution module 1001, configured to perform a second operation, where the second operation includes one of the following:
binding a QoS flow to a service flow or binding a QoS flow to a target rule;
sending or not sending first information;
determining that first information is present or absent in a context of the QoS flow;
determining that the context of the QoS flow includes or does not include a PSDB information element;
determining that a PSER information element is present or absent in the context of the QoS flow;
determining that a PSIHI information element is present or absent in the context of the QoS flow;
determining a value of first indication information corresponding to the QoS flow, where
determining a value of second indication information corresponding to the QoS flow; and
determining a value of third indication information corresponding to the QoS flow, where
the first information is used to indicate applying a PSDB;
the first indication information is used to indicate one of the following: applying the PSDB and not applying the PSDB;
the second indication information is used to indicate one of the following: applying a PSER and not applying the PSER; and
the third indication information is used to indicate one of the following: applying PSIHI and not applying the PSIHI.

Optionally, the binding a QoS flow to a service flow includes: binding the QoS flow to the service flow based on at least one of the following:
existence or nonexistence of first information corresponding to the service flow;
the first indication information corresponding to the service flow;
second indication information corresponding to the service flow;
third indication information corresponding to the service flow;
existence or nonexistence of a PSDB information element corresponding to the service flow; and
existence or nonexistence of a corresponding QoS requirement at a PDU set level in the service flow;
   and/or
the binding a QoS flow to a target rule includes: binding the QoS flow to the target rule based on at least one of the following:
   existence or nonexistence of the first information in the target rule;
   the first indication information in the target rule;
   existence or nonexistence of the PSDB information element in the target rule;
   existence or nonexistence of a QoS requirement at a PDU set level in the target rule;
   presence or absence of the PSER information element in the target rule; and
   presence or absence of the PSIHI information element in the target rule.

Optionally, the binding a QoS flow to a service flow includes: in a case that a fifth condition is met, binding different QoS flows to a first service flow and a second service flow, where
the fifth condition includes at least one of the following:
the first information exists in the first service flow, but the first information does not exist in the second service flow;
a value of the first indication information for the first service flow is different from a value of the first indication information for the second service flow;
the PSDB information element exists in the first service flow, but the PSDB information element does not exist in the second service flow; and
the first service flow has a QoS requirement at a PDU set level, but the second service flow does not have a QoS requirement at the PDU set level;
   and/or
the binding a QoS flow to a target rule includes:
   in a case that a sixth condition is met, binding different QoS flows to a first target rule and a second target rule, where
   the sixth condition includes at least one of the following:
      the first information exists in the first target rule, but the first information does not exist in the second target rule;
      a value of the first indication information in the first target rule is different from a value of the first indication information in the second target rule;
      the PSDB information element exists in the first target rule, but the PSDB information element does not exist in the second target rule; and
      the first target rule has a QoS requirement at a PDU set level, but the second target rule does not have a QoS requirement at the PDU set level.

Optionally, the binding a QoS flow to a service flow or a target rule includes:
in a case that a seventh condition is met, binding a same QoS flow to a third service flow and a fourth service flow, where
the seventh condition includes at least one of the following:
   the first information exists in the third service flow, and the first information exists in the fourth service flow;
   a value of the first indication information for the third service flow is the same as a value of the first indication information for the fourth service flow;
   the PSDB information element exists in the third service flow, and the PSDB information element exists in the fourth service flow; and
   the third service flow and the fourth service flow have a same QoS requirement at a PDU set level;
      and/or
   the binding a QoS flow to a target rule includes:
      in a case that an eighth condition is met, binding a same QoS flow to a third target rule and a fourth target rule, where
      the eighth condition includes at least one of the following:
         the first information exists in the third target rule, and the first information exists in the fourth target rule;
         a value of the first indication information in the third target rule is the same as a value of the first indication information in the fourth target rule;
         the PSDB information element exists in the third target rule, and the PSDB information element exists in the fourth target rule; and
         the third target rule and the fourth target rule have a same QoS requirement at a PDU set level.

Optionally, the determining that first information is present or absent in a context of the QoS flow includes: determining, based on presence or absence of the first information in the target rule, that the first information is present or absent in the context of the QoS flow;
and/or
the determining that the context of the QoS flow includes or does not include a PSDB information element includes: determining, based on presence or absence of the PSDB information element in the target rule, that the context of the QoS flow includes or does not include the PSDB information element;
   and/or
the determining a value of first indication information corresponding to the QoS flow includes: determining, based on a value of the first indication information corresponding to the service flow or a value of the first indication information in the target rule, the value of the first indication information corresponding to the QoS flow;
   and/or
the determining that a PSER information element is present or absent in the context of the QoS flow includes: determining, based on presence or absence of the PSER information element in the target rule, that the PSER information element is present or absent in the context of the QoS flow;
   and/or
the determining that a PSIHI information element is present or absent in the context of the QoS flow includes: determining, based on presence or absence of the PSIHI information element in the target rule, that the PSIHI information element is present or absent in the context of the QoS flow;
   and/or
the determining a value of second indication information corresponding to the QoS flow includes: determining, based on a value of the second indication information corresponding to the service flow or the second indication information in the target rule, the value of the second indication information corresponding to the QoS flow;
   and/or
the determining a value of third indication information corresponding to the QoS flow includes: determining, based on a value of the third indication information corresponding to the service flow or the third indication information in the target rule, the value of the third indication information corresponding to the QoS flow, where
the QoS flow is the QoS flow bound to the target rule.

Optionally, the determining, based on presence or absence of the first information in the target rule, that the first information is present or absent in the context of the QoS flow includes: in a case that the first information is present in the target rule, determining that the context of the QoS flow includes the first information;
and/or
the determining, based on presence or absence of the PSDB information element in the target rule, that the context of the QoS flow includes or does not include the PSDB information element includes: in a case that the PSDB information element is present in the target rule, determining that the PSDB information element is present in the context of the QoS flow;
   and/or
the determining, based on a value of the first indication information in the target rule, the value of the first indication information corresponding to the QoS flow includes: in a case that the first indication information in the target rule is used to indicate applying the PSDB to the service flow, determining that the first indication information corresponding to the QoS flow is used to indicate applying the PSDB to the QoS flow;
the determining, based on presence or absence of the PSER information element in the target rule, that the PSER information element is present or absent in the context of the QoS flow includes: in a case that the PSER information element is present in the target rule, determining that the PSER information element is present in the context of the QoS flow;
   and/or
the determining, based on presence or absence of the PSIHI information element in the target rule, that the PSIHI information element is present or absent in the context of the QoS flow includes: in a case that the PSIHI information element is present in the target rule, determining that the PSIHI information element is present in the context of the QoS flow;
   and/or
the determining, based on a value of the second indication information corresponding to the service flow or the second indication information in the target rule, the value of the second indication information corresponding to the QoS flow includes: in a case that the second indication information corresponding to the service flow is used to indicate applying the PSER to the service flow, determining that the second indication information corresponding to the QoS flow is used to indicate applying the PSER to the QoS flow;
   and/or
the determining, based on a value of the third indication information corresponding to the service flow or the third indication information in the target rule, the value of the third indication information corresponding to the QoS flow includes: in a case that the third indication information corresponding to the service flow is used to indicate applying the PSIHI to the service flow, determining that the third indication information corresponding to the QoS flow is used to indicate applying the PSIHI to the QoS flow.

Optionally, the apparatus further includes:
a second obtaining module, configured to obtain second target information; and
the second execution module is specifically configured to:
   perform the second operation based on the second target information, where
   the second target information includes at least one of the following: a first QoS identifier or a second QoS identifier, the PSDB, the PSER, the PSIHI, the first information, the first indication information, the second indication information, and the third indication information, where
   the first indication information is used to indicate one of the following: applying the PSDB and not applying the PSDB;
   the second indication information is used to indicate one of the following: applying a PSER and not applying the PSER; and
   the third indication information is used to indicate one of the following: applying PSIHI and not applying the PSIHI.

In this embodiment of this application, the communication device 1000 can implement each process implemented in the method embodiment shown in FIG. 3 of this application, with the same beneficial effect achieved. To avoid repetition, details are not described herein again.

FIG. 11 is a structural diagram of a communication device according to an embodiment of this application. The communication device is a third communication device. As shown in FIG. 11, the communication device 1100 includes:
a third execution module 1101, configured to perform a third operation, where the third operation includes at least one of the following:
determining a QoS identifier;
sending second target information, where the second target information includes at least one of the following: a first QoS identifier or a second QoS identifier, a PSDB, a PSER, PSIHI, first information, first indication information, second indication information, and third indication information, where the first indication information is used to indicate one of the following: applying the PSDB and not applying the PSDB; the second indication information is used to indicate one of the following: applying the PSER and not applying the PSER; and the third indication information is used to indicate one of the following: applying the PSIHI and not applying the PSIHI;
sending a target rule;
accepting or rejecting a requested PSDB, PSER, and/or PSIHI;
determining that one of the following is present or absent in the target rule: the PSDB and a QoS identifier whose mapping information includes the PSDB;
determining that one of the following is present or absent in the target rule: the PSER and a QoS identifier whose mapping information includes the PSER;
determining that one of the following is present or absent in the target rule: the PSIHI and a QoS identifier whose mapping information incudes the PSIHI;
performing a first sub-operation, or performing a second sub-operation;
sending or not sending the first information;
determining that the first information is present or absent in the target rule;
determining that a value of the first indication information is one of the following: a value used to indicate applying the PSDB, and a value used to indicate not applying the PSDB;
determining that the QoS identifier is one of the following: the first QoS identifier and the second QoS identifier;
sending or not sending the PSDB; and
determining that the PSDB is present or absent in the target rule, where
the first information is used to indicate applying the PSDB;
the first sub-operation includes at least one of the following:
determining to apply the PSDB or to accept the requested PSDB;
determining that one of the following is present in a target policy: the PSDB, and the information including the PSDB mapped to the QoS identifier;
sending the first information, and/or determining that the first information is present in the target rule, where the first information is used to indicate applying the PSDB;
determining that the first indication information is the value used to indicate applying the PSDB;
determining that the QoS identifier is the first QoS identifier, where information mapped to the first QoS identifier includes the PSDB; and
sending the PSDB, and/or determining that the PSDB is present in the target rule; and
the second sub-operation includes at least one of the following:
   determining not to apply the PSDB or to reject the requested PSDB;
   determining that one of the following is absent in the target policy: the PSDB, and the information including the PSDB mapped to the QoS identifier;
   not sending the first information, and/or determining that the first information is absent in the target rule, where the first information is used to indicate applying the PSDB;
   determining that the value of the first indication information is the value used to indicate not applying the PSDB;
   determining that the QoS identifier is the second QoS identifier, where information mapped to the second QoS identifier does not include the PSDB;
   not sending a PSDB information element; and
   determining that the PSDB information element is absent in the target rule.

Optionally, the first information is first information corresponding to a service flow, where the first information corresponding to the service flow is used to indicate applying the PSDB to the service flow;
or
the first information is first information in the target rule, where the first information in the target rule is used to indicate applying the PSDB to a service flow in the target rule.

Optionally, the apparatus further includes:
a third obtaining module, configured to obtain third target information, where the third target information includes at least one of the following: the requested PSDB, and a first threshold; and
the third execution module is specifically configured to:
   perform the third operation based on the third target information.

Optionally, in a case that the third target information includes the first threshold, the third target information further includes at least one of the following: application description information corresponding to the first threshold; and flow description information corresponding to the first threshold.

The application description information corresponding to the first threshold is used to identify an application (such as a third-party application) corresponding to the first threshold.

The flow description information corresponding to the first threshold is used to identify an application (such as a third-party application) or service flow corresponding to the first threshold.

Optionally, the determining a QoS identifier includes:
determining that the QoS identifier is one of the following: the first QoS identifier and the second QoS identifier.

Optionally, the performing a first sub-operation includes:
in a case that a ninth condition is met, performing the first sub-operation, where
the ninth condition includes at least one of the following:
   a first threshold corresponding to the requested PSDB exists;
   the first threshold is met;
   the third communication device determines to apply the PSDB; and
   the target rule includes the PSDB.

Optionally, the performing a second sub-operation includes:
in a case that a tenth condition is met, performing the second sub-operation, where
the tenth condition includes at least one of the following:
   a first threshold corresponding to the requested PSDB does not exist;
   the first threshold is not met;
   the third communication device determines not to apply the PSDB; and
   the target rule does not include the PSDB.

Optionally, that the first threshold is met includes:
the requested PSDB is greater than or equal to the first threshold.

Optionally, that the first threshold is not met includes:
the requested PSDB is less than or equal to the first threshold.

Optionally, the accepting or rejecting a requested PSDB includes:
determining, based on at least one of the following, to accept or reject the requested PSDB:
existence or nonexistence of a first threshold corresponding to the requested PSDB;
the PSDB; and
the first threshold.

Optionally, that a first threshold corresponding to the requested PSDB exists or does not exist includes:
determining, by matching a service flow with flow description information or application description information corresponding to the first information, that the first threshold corresponding to the requested PSDB exists or does not exist.

Optionally, the first information includes at least one of the following: a first threshold, a second threshold, a first duration, a second duration, information for calculating the first threshold, and information for calculating the second threshold.

Optionally, the first threshold is one of the following: a maximum value of a time interval between a reception time of a packet in a packet set and a reception time of a first packet in the packet set, a value obtained by subtracting the first duration from the PSDB, a value obtained by subtracting the second duration from an AN PSDB, a value less than the PSDB, a value less than the AN PSDB, a value less than or equal to the PSDB minus a PDB, a value less than or equal to the AN PSDB minus an AN PDB, and a value less than or equal to the AN PSDB minus the second duration;
and/or
the second threshold is one of the following: the first threshold, a maximum value of a time interval between a reception time of a packet in a packet set and a reception time of a first packet in the packet set, a value obtained by subtracting the first duration from an AN PSDB, a value obtained by subtracting the second duration from the AN PSDB, a value less than the PSDB, a value less than the AN PSDB, and a value less than or equal to the AN PSDB minus an AN PDB;
   and/or
the first duration is one of the following: a minimum delay budget between a terminal and an anchor gateway for any packet in a packet set, a value obtained by subtracting the first threshold from the PSDB, a value obtained by subtracting the first threshold from an AN PSDB, a value obtained by subtracting the second threshold from the AN PSDB, a PDB, a value greater than or equal to the PDB, and a value greater than or equal to the PDB and less than or equal to the PSDB;
   and/or
the second duration is one of the following: a minimum delay budget between a terminal and a radio access network RAN for any packet in a packet set, a value obtained by subtracting the first threshold from the PSDB, a value obtained by subtracting the first threshold from an AN PSDB, a value obtained by subtracting the second threshold from the AN PSDB, a value obtained by subtracting CN delay information from the first duration, an AN PDB, a value greater than or equal to the AN PDB, and a value greater than or equal to the AN PDB and less than or equal to the AN PSDB;
   and/or
the first threshold is a maximum time interval corresponding to the PSDB and/or an AN PSDB;
   and/or
the second threshold is a maximum time interval corresponding to an AN PSDB;
   and/or
the first duration corresponds to the PSDB and/or an AN PSDB;
   and/or
the second duration corresponds to an AN PSDB;
   and/or
the first threshold is a maximum duration threshold for applying the PSDB and/or applying an AN PSDB;
   and/or
the second threshold is a maximum duration threshold for applying an AN PSDB, where
the maximum time interval or the maximum duration threshold is a threshold for a maximum value of a time interval between a reception time of a packet in a packet set and a reception time of a first packet in the packet set.

Optionally, the applying the PSDB includes applying the PSDB that is mapped to the QoS identifier;
and/or
the not applying the PSDB includes not applying the PSDB that is mapped to the QoS identifier.

In an implementation, a maximum value of a time interval between a reception time of a packet in a packet set and a reception time of a first packet in the packet set includes a maximum value of a time interval between a reception time of last receiving a packet in the packet set and a reception time of a first packet in the packet set.

In this embodiment of this application, the communication device 1100 can implement each process implemented in the method embodiment shown in FIG. 4 of this application, with the same beneficial effect achieved. To avoid repetition, details are not described herein again.

FIG. 12 is a structural diagram of a communication device according to an embodiment of this application. The communication device is a fourth communication device. As shown in FIG. 12, the communication device 1200 includes:
a fourth execution module 1201, configured to perform a fourth operation, where the fourth operation includes one of the following:
obtaining third target information, and determining, based on the third target information, a QoS identifier corresponding to a service flow or a target policy;
not determining, based on the third target information, the QoS identifier corresponding to the service flow or the target policy;
not determining the QoS identifier based on a packet set error rate (PDU Set Error Rate) PSER;
not determining the QoS identifier based on packet set integrated handling information (PDU Set Integrated Handling Information) PSIHI; and
not determining the QoS identifier based on packet set importance, where
the third target information includes at least one of the following: a requested PSDB, a locally configured PSDB, a locally configured PSER, a locally configured PSIHI, and a first threshold; and
information mapped to the QoS identifier does not include the PSDB, or does not include the PSDB, the PSER, or the PSIHI.

QoS information mapped to the QoS identifier does not include the PDU set QoS.

In an implementation, the requested PSDB, such as the PSDB requested by the AF, is sent directly or indirectly by the AF to the fourth communication device.

In an implementation, the PSER may be a requested PSER (such as a PSER requested by the AF, which is directly or indirectly sent by the AF to the fourth communication device) or a PSER locally configured by the fourth communication device.

In an implementation, the PSIHI may be requested PSIHI (such as PSIHI requested by the AF, which is directly or indirectly sent by the AF to the fourth communication device) or PSIHI locally configured by the fourth communication device.

Optionally, the not determining, based on the third target information, the QoS identifier corresponding to the service flow or the target policy includes at least one of the following:
in a case that the third target information includes the requested PSDB or the locally configured PSDB, not determining, based on the requested PSDB or the locally configured PSDB, the QoS identifier corresponding to the service flow or the target policy;
in a case that the third target information includes the PSER, and/or that it is determined to apply the PSER, not determining, based on the PSER, the QoS identifier corresponding to the service flow or the target policy; and
in a case that the third target information includes the PSIHI, and/or that it is determined to apply the PSIHI, not determining, based on the PSIHI, the QoS identifier corresponding to the service flow or the target policy.

Optionally, the not determining the QoS identifier based on a PSER includes: in a case that the PSER is obtained, and/or that it is determined to apply the PSER, not determining the QoS identifier based on the PSER.

Optionally, the not determining the QoS identifier based on PSIHI includes: in a case that the PSIHI is obtained, and/or that it is determined to apply the PSIHI, not determining the QoS identifier based on the PSIHI.

In this embodiment of this application, the communication device 1200 can implement each process implemented in the method embodiment shown in FIG. 5 of this application, with the same beneficial effect achieved. To avoid repetition, details are not described herein again.

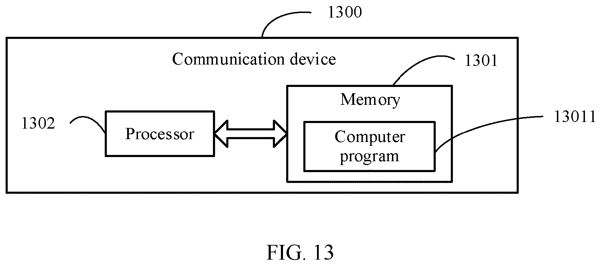

Optionally, as shown in FIG. 13, an embodiment of this application further provides a communication device 1300, including a processor 1302, a memory 1301, and a computer program 13011 stored in the memory 1301 and capable of running on the processor 1302. When the program program 13011 is executed by the processor 1302, each process of the foregoing embodiments of the information processing method is implemented, with the same technical effect achieved. To avoid repetition, details are not described herein again.

An embodiment of this application further provides a computer-readable storage medium. The computer-readable storage medium stores a computer program. When the computer program is executed by a processor, each process of any one of the foregoing information processing method embodiments is implemented, with the same technical effect achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for enabling a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An information processing method, comprising:
performing, by a first communication device, a first operation, wherein the first operation comprises at least one of the following:
applying at least one of the following to a quality of service QoS flow: a packet set delay budget PSDB, an access network AN PDSB, and a discard timer at a protocol data unit set PDU set level;
not applying at least one of the following to the QoS flow: the PSDB, the AN PDSB, and the discard timer at the PDU set level;
applying at least one of the following to the QoS flow: a packet delay budget PDB, an AN PDB, and a discard timer at a PDU level;
applying at least one of a PSDB and an AN PDSB that are mapped to a QoS identifier; and
not applying at least one of the PSDB and the AN PDSB that are mapped to the QoS identifier.

2. The method according to claim 1, wherein the method further comprises:
obtaining, by the first communication device, first target information, wherein the first target information comprises at least one of the following: first information, first indication information, the QoS identifier, a first QoS identifier, a second QoS identifier, and a PSDB information element; and
the performing, by a first communication device, a first operation comprises:
performing, by the first communication device, the first operation based on the first target information, wherein
the first information is used to indicate applying the PSDB;
the first indication information is used to indicate one of the following: applying the PSDB and not applying the PSDB;
information mapped to the first QoS identifier comprises the PSDB; and
information mapped to the second QoS identifier does not comprise the PSDB.

3. The method according to claim 2, wherein
the first information is first information corresponding to the QoS flow, wherein the first information corresponding to the QoS flow is used to indicate applying the PSDB to the QoS flow;
and/or
the first indication information is first indication information corresponding to the QoS flow, wherein the first indication information corresponding to the QoS flow is used to indicate one of the following: applying the PSDB to the QoS flow and not applying the PSDB to the QoS flow.

4. The method according to claim 1, wherein the applying at least one of the following to a QoS flow: a PSDB, an AN PDSB, and a discard timer at a PDU set level, comprises:
in a case that a first condition is met, applying at least one of the following to the QoS flow: the PSDB, the AN PDSB, and the discard timer at the PDU set level, wherein
the first condition comprises at least one of the following:
first information corresponding to the QoS flow is received, wherein the first information corresponding to the QoS flow is used to indicate applying the PSDB to the QoS flow;
a PSDB information element corresponding to the QoS flow is received;
a value of first indication information corresponding to the QoS flow applying the PSDB to the QoS flow, or first indication information corresponding to the QoS flow indicates applying the PSDB; and
a QoS identifier corresponding to the QoS flow is a first QoS identifier, wherein information mapped to the first QoS identifier comprises the PSDB.

5. The method according to claim 1, wherein the not applying at least one of the following to the QoS flow: the PSDB, the AN PDSB, and the discard timer at the PDU set level, and/or the applying at least one of the following to the QoS flow: a PDB, an AN PDB, and a discard timer at a PDU level, comprises:
in a case that a second condition is met, not applying at least one of the following to the QoS flow: the PSDB, the AN PDSB, and the discard timer at the PDU set level, and/or applying at least one of the following to the QoS flow: the PDB, the AN PDB, and the discard timer at the PDU level, wherein
the second condition comprises at least one of the following:
first information corresponding to the QoS flow is not received, wherein the first information corresponding to the QoS flow is used to indicate applying the PSDB to the QoS flow, or first information corresponding to the QoS flow indicates applying the PSDB;
a PSDB information element corresponding to the QoS flow is not received;
a value of first indication information corresponding to the QoS flow is a value used to indicate not applying the PSDB to the QoS flow, or first indication information corresponding to the QoS flow indicates not applying the PSDB; and
a QoS identifier corresponding to the QoS flow is a second QoS identifier, wherein information mapped to the second QoS identifier does not comprise the PSDB.

6. The method according to claim 1, wherein the applying at least one of a PSDB and an AN PDSB that are mapped to a QoS identifier comprises:
in a case that a third condition is met, applying at least one of the PSDB and the AN PDSB that are mapped to the QoS identifier, wherein
the third condition comprises at least one of the following:
first information is received, wherein the first information is used to indicate applying the PSDB; and
first indication information indicates applying the PSDB.

7. The method according to claim 1, wherein the not applying at least one of the PSDB and the AN PDSB that are mapped to the QoS identifier comprises:
in a case that a fourth condition is met, not applying at least one of the PSDB and the AN PDSB that are mapped to the QoS identifier, wherein
the fourth condition comprises at least one of the following:
first information is not received, wherein the first information is used to indicate applying the PSDB; and
first indication information indicates not applying the PSDB.

8. The method according to any one of claims 1 to 7, wherein
the applying the PSDB comprises applying the PSDB that is mapped to the QoS identifier;
and/or
the not applying the PSDB comprises not applying the PSDB that is mapped to the QoS identifier.

9. The method according to any one of claims 2 to 7, wherein the first information comprises at least one of the following: a first threshold, a second threshold, a first duration, a second duration, information for calculating the first threshold, and information for calculating the second threshold.

10. The method according to claim 9, wherein
the first threshold is one of the following: a maximum value of a time interval between a reception time of a packet in a packet set and a reception time of a first packet in the packet set, a value obtained by subtracting the first duration from the PSDB, a value obtained by subtracting the second duration from the AN PSDB, a value less than the PSDB, a value less than the AN PSDB, a value less than or equal to the PSDB minus the PDB, a value less than or equal to the AN PSDB minus the AN PDB, and a value less than or equal to the AN PSDB minus the second duration;
and/or
the second threshold is one of the following: the first threshold, a maximum value of a time interval between a reception time of a packet in a packet set and a reception time of a first packet in the packet set, a value obtained by subtracting the first duration from the AN PSDB, a value obtained by subtracting the second duration from the AN PSDB, a value less than the PSDB, a value less than the AN PSDB, and a value less than or equal to the AN PSDB minus the AN PDB;
and/or
the first duration is one of the following: a minimum delay budget between a terminal and an anchor gateway for any packet in a packet set, a value obtained by subtracting the first threshold from the PSDB, a value obtained by subtracting the first threshold from the AN PSDB, a value obtained by subtracting the second threshold from the AN PSDB, the PDB, a value greater than or equal to the PDB, and a value greater than or equal to the PDB and less than or equal to the PSDB;
and/or
the second duration is one of the following: a minimum delay budget between a terminal and a radio access network RAN for any packet in a packet set, a value obtained by subtracting the first threshold from the PSDB, a value obtained by subtracting the first threshold from the AN PSDB, a value obtained by subtracting the second threshold from the AN PSDB, a value obtained by subtracting CN delay information from the first duration, the AN PDB, a value greater than or equal to the AN PDB, and a value greater than or equal to the AN PDB and less than or equal to the AN PSDB;
and/or
the first threshold is a maximum time interval corresponding to the PSDB and/or the AN PSDB;
and/or
the second threshold is a maximum time interval corresponding to the AN PSDB;
and/or
the first duration corresponds to the PSDB and/or the AN PSDB;
and/or
the second duration corresponds to the AN PSDB;
and/or
the first threshold is a maximum duration threshold for applying the PSDB and/or applying the AN PSDB;
and/or
the second threshold is a maximum duration threshold for applying the AN PSDB, wherein
the maximum time interval or the maximum duration threshold is a threshold for a maximum value of a time interval between a reception time of a packet in a packet set and a reception time of a first packet in the packet set.

11. An information processing method, comprising:
performing, by a second communication device, a second operation, wherein the second operation comprises one of the following:
binding a QoS flow to a service flow or binding a QoS flow to a target rule;
sending or not sending first information;
determining that first information is present or absent in a context of the QoS flow;
determining that a PSDB information element is present or absent in the context of the QoS flow;
determining that a PSER information element is present or absent in the context of the QoS flow;
determining that a PSIHI information element is present or absent in the context of the QoS flow;
determining a value of first indication information corresponding to the QoS flow;
determining a value of second indication information corresponding to the QoS flow; and
determining a value of third indication information corresponding to the QoS flow, wherein
the first information is used to indicate applying a PSDB;
the first indication information is used to indicate one of the following: applying the PSDB and not applying the PSDB;
the second indication information is used to indicate one of the following: applying a packet set error rate PSER and not applying the PSER; and
the third indication information is used to indicate one of the following: applying packet set integrated handling information PSIHI and not applying the PSIHI.

12. The method according to claim 11, wherein the binding a QoS flow to a service flow comprises: binding the QoS flow to the service flow based on at least one of the following:
existence or nonexistence of first information corresponding to the service flow;
the first indication information corresponding to the service flow;
second indication information corresponding to the service flow;
third indication information corresponding to the service flow;
existence or nonexistence of a PSDB information element corresponding to the service flow; and
existence or nonexistence of a corresponding QoS requirement at a PDU set level in the service flow;
and/or
the binding a QoS flow to a target rule comprises: binding the QoS flow to the target rule based on at least one of the following:
existence or nonexistence of the first information in the target rule;
the first indication information in the target rule;
existence or nonexistence of the PSDB information element in the target rule;
existence or nonexistence of a QoS requirement at a PDU set level in the target rule;
presence or absence of the PSER information element in the target rule; and
presence or absence of the PSIHI information element in the target rule.

13. The method according to claim 11, wherein the binding a QoS flow to a service flow comprises: in a case that a fifth condition is met, binding different QoS flows to a first service flow and a second service flow, wherein
the fifth condition comprises at least one of the following:
the first information exists in the first service flow, but the first information does not exist in the second service flow;
a value of the first indication information for the first service flow is different from a value of the first indication information for the second service flow;
the PSDB information element exists in the first service flow, but the PSDB information element does not exist in the second service flow; and
the first service flow has a QoS requirement at a PDU set level, but the second service flow does not have a QoS requirement at the PDU set level;
and/or
the binding a QoS flow to a target rule comprises:
in a case that a sixth condition is met, binding different QoS flows to a first target rule and a second target rule, wherein
the sixth condition comprises at least one of the following:
the first information exists in the first target rule, but the first information does not exist in the second target rule;
a value of the first indication information in the first target rule is different from a value of the first indication information in the second target rule;
the PSDB information element exists in the first target rule, but the PSDB information element does not exist in the second target rule; and
the first target rule has a QoS requirement at a PDU set level, but the second target rule does not have a QoS requirement at the PDU set level.

14. The method according to claim 11, wherein the binding a QoS flow to a service flow or a target rule comprises:
in a case that a seventh condition is met, binding a same QoS flow to a third service flow and a fourth service flow, wherein
the seventh condition comprises at least one of the following:
the first information exists in the third service flow, and the first information exists in the fourth service flow;
a value of the first indication information for the third service flow is the same as a value of the first indication information for the fourth service flow;
the PSDB information element exists in the third service flow, and the PSDB information element exists in the fourth service flow; and
the third service flow and the fourth service flow have a same QoS requirement at a PDU set level;
and/or
the binding a QoS flow to a target rule comprises:
in a case that an eighth condition is met, binding a same QoS flow to a third target rule and a fourth target rule, wherein
the eighth condition comprises at least one of the following:
the first information exists in the third target rule, and the first information exists in the fourth target rule;
a value of the first indication information in the third target rule is the same as a value of the first indication information in the fourth target rule;
the PSDB information element exists in the third target rule, and the PSDB information element exists in the fourth target rule; and
the third target rule and the fourth target rule have a same QoS requirement at a PDU set level.

15. The method according to claim 11, wherein
the determining that first information is present or absent in a context of the QoS flow comprises: determining, based on presence or absence of the first information in the target rule, that the first information is present or absent in the context of the QoS flow;
and/or
the determining that a PSDB information element is present or absent in the context of the QoS flow comprises: determining, based on presence or absence of the PSDB information element in the target rule, that the context of the QoS flow comprises or does not comprise the PSDB information element;
and/or
the determining a value of first indication information corresponding to the QoS flow comprises: determining, based on a value of the first indication information corresponding to the service flow or a value of the first indication information in the target rule, the value of the first indication information corresponding to the QoS flow;
and/or
the determining that a PSER information element is present or absent in the context of the QoS flow comprises: determining, based on presence or absence of the PSER information element in the target rule, that the PSER information element is present or absent in the context of the QoS flow;
and/or
the determining that a PSIHI information element is present or absent in the context of the QoS flow comprises: determining, based on presence or absence of the PSIHI information element in the target rule, that the PSIHI information element is present or absent in the context of the QoS flow;
and/or
the determining a value of second indication information corresponding to the QoS flow comprises: determining, based on a value of the second indication information corresponding to the service flow, the value of the second indication information corresponding to the QoS flow;
and/or
the determining a value of third indication information corresponding to the QoS flow comprises: determining, based on a value of the third indication information corresponding to the service flow, the value of the third indication information corresponding to the QoS flow, wherein
the QoS flow is the QoS flow bound to the target rule.

16. The method according to claim 15, wherein the determining, based on presence or absence of the first information in the target rule, that the first information is present or absent in the context of the QoS flow comprises: in a case that the first information is present in the target rule, determining that the context of the QoS flow comprises the first information;
and/or
the determining, based on presence or absence of the PSDB information element in the target rule, that the context of the QoS flow comprises or does not comprise the PSDB information element comprises: in a case that the PSDB information element is present in the target rule, determining that the PSDB information element is present in the context of the QoS flow;
and/or
the determining, based on a value of the first indication information in the target rule, the value of the first indication information corresponding to the QoS flow comprises: in a case that the first indication information in the target rule is used to indicate applying the PSDB to the service flow, determining that the first indication information corresponding to the QoS flow is used to indicate applying the PSDB to the QoS flow;
the determining, based on presence or absence of the PSER information element in the target rule, that the PSER information element is present or absent in the context of the QoS flow comprises: in a case that the PSER information element is present in the target rule, determining that the PSER information element is present in the context of the QoS flow;
and/or
the determining, based on presence or absence of the PSIHI information element in the target rule, that the PSIHI information element is present or absent in the context of the QoS flow comprises: in a case that the PSIHI information element is present in the target rule, determining that the PSIHI information element is present in the context of the QoS flow;
and/or
the determining, based on a value of the second indication information corresponding to the service flow or the second indication information in the target rule, the value of the second indication information corresponding to the QoS flow comprises: in a case that the second indication information corresponding to the service flow is used to indicate applying the PSER to the service flow, determining that the second indication information corresponding to the QoS flow is used to indicate applying the PSER to the QoS flow;
and/or
the determining, based on a value of the third indication information corresponding to the service flow or the third indication information in the target rule, the value of the third indication information corresponding to the QoS flow comprises: in a case that the third indication information corresponding to the service flow is used to indicate applying the PSIHI to the service flow, determining that the third indication information corresponding to the QoS flow is used to indicate applying the PSIHI to the QoS flow.

17. The method according to claim 11, wherein the method further comprises:
obtaining, by the second communication device, second target information; and
the performing, by a second communication device, a second operation comprises:
performing, by the second communication device, the second operation based on the second target information, wherein
the second target information comprises at least one of the following: a first QoS identifier or a second QoS identifier, the PSDB, the PSER, the PSIHI, the first information, the first indication information, the second indication information, and the third indication information; and
the first indication information is used to indicate one of the following: applying the PSDB and not applying the PSDB.

18. An information processing method, comprising:
performing, by a third communication device, a third operation, wherein the third operation comprises at least one of the following:
determining a QoS identifier;
sending second target information, wherein the second target information comprises at least one of the following: a first QoS identifier or a second QoS identifier, a PSDB, a PSER, PSIHI, first information, first indication information, second indication information, and third indication information, wherein the first indication information is used to indicate one of the following: applying the PSDB and not applying the PSDB; the second indication information is used to indicate one of the following: applying the PSER and not applying the PSER; and the third indication information is used to indicate one of the following: applying the PSIHI and not applying the PSIHI;
sending a target rule;
accepting or rejecting a requested PSDB, PSER, and/or PSIHI;
determining that one of the following is present or absent in the target rule: the PSDB and a QoS identifier whose mapping information comprises the PSDB;
determining that one of the following is present or absent in the target rule: the PSER and a QoS identifier whose mapping information comprises the PSER;
determining that one of the following is present or absent in the target rule: the PSIHI and a QoS identifier whose mapping information comprises the PSIHI;
performing a first sub-operation, or performing a second sub-operation;
sending or not sending the first information;
determining that the first information is present or absent in the target rule;
determining that a value of the first indication information is one of the following: a value used to indicate applying the PSDB, and a value used to indicate not applying the PSDB;
determining that the QoS identifier is one of the following: the first QoS identifier and the second QoS identifier;
sending or not sending the PSDB; and
determining that the PSDB is present or absent in the target rule, wherein
the first information is used to indicate applying the PSDB;
the first sub-operation comprises at least one of the following:
determining to apply the PSDB or to accept the requested PSDB;
determining that one of the following is present in a target policy: the PSDB, and the information comprising the PSDB mapped to the QoS identifier;
sending the first information, and/or determining that the first information is present in the target rule, wherein the first information is used to indicate applying the PSDB;
determining that the first indication information is the value used to indicate applying the PSDB;
determining that the QoS identifier is the first QoS identifier, wherein information mapped to the first QoS identifier comprises the PSDB; and
sending the PSDB, and/or determining that the PSDB is present in the target rule; and
the second sub-operation comprises at least one of the following:
determining not to apply the PSDB or to reject the requested PSDB;
determining that one of the following is absent in the target policy: the PSDB, and the information comprising the PSDB mapped to the QoS identifier;
not sending the first information, and/or determining that the first information is absent in the target rule, wherein the first information is used to indicate applying the PSDB;
determining that the value of the first indication information is the value used to indicate not applying the PSDB;
determining that the QoS identifier is the second QoS identifier, wherein information mapped to the second QoS identifier does not comprise the PSDB;
not sending a PSDB information element; and
determining that the PSDB information element is absent in the target rule.

19. The method according to claim 18, wherein the first information is first information corresponding to the service flow, wherein the first information corresponding to the service flow is used to indicate applying the PSDB to the service flow;
or
the first information is first information in the target rule, wherein the first information in the target rule is used to indicate applying the PSDB to a service flow in the target rule.

20. The method according to claim 18, wherein the method further comprises:
obtaining, by the third communication device, third target information, wherein the third target information comprises at least one of the following: the requested PSDB, a locally configured PSDB, a locally configured PSER, a locally configured PSIHI, and a first threshold; and
the performing, by a third communication device, a third operation comprises:
performing, by the third communication device, the third operation based on the third target information.

21. The method according to claim 20, wherein in a case that the third target information comprises the first threshold, the third target information further comprises at least one of the following: application description information corresponding to the first threshold; and flow description information corresponding to the first threshold.

22. The method according to claim 18, wherein the determining a QoS identifier comprises:
determining that the QoS identifier is one of the following: the first QoS identifier and the second QoS identifier.

23. The method according to claim 18, wherein the performing a first sub-operation comprises:
in a case that a ninth condition is met, performing the first sub-operation, wherein
the ninth condition comprises at least one of the following:
a first threshold corresponding to the requested PSDB exists;
the first threshold is met;
the third communication device determines to apply the PSDB; and
the PSDB is present in the target rule.

24. The method according to claim 18, wherein the performing a second sub-operation comprises:
in a case that a tenth condition is met, performing the second sub-operation, wherein
the tenth condition comprises at least one of the following:
a first threshold corresponding to the requested PSDB does not exist;
the first threshold is not met;
the third communication device determines not to apply the PSDB; and
the target rule does not comprise the PSDB.

25. The method according to claim 23, wherein that the first threshold is met comprises: the requested PSDB is greater than or equal to the first threshold.

26. The method according to claim 24, wherein that the first threshold is not met comprises:
the requested PSDB is less than or equal to the first threshold.

27. The method according to claim 18, wherein the accepting or rejecting a requested PSDB comprises:
determining, based on at least one of the following, to accept or reject the requested PSDB:
existence or nonexistence of a first threshold corresponding to the requested PSDB;
the PSDB; and
the first threshold.

28. The method according to claim 27, wherein that a first threshold corresponding to the requested PSDB exists or does not exist comprises:
determining, by matching a service flow with flow description information or application description information corresponding to the first information, that the first threshold corresponding to the requested PSDB exists or does not exist.

29. The method according to claim 18, wherein the first information comprises at least one of the following: a first threshold, a second threshold, a first duration, a second duration, information for calculating the first threshold, and information for calculating the second threshold.

30. The method according to claim 29, wherein the first threshold is one of the following: a maximum value of a time interval between a reception time of a packet in a packet set and a reception time of a first packet in the packet set, a value obtained by subtracting the first duration from the PSDB, a value obtained by subtracting the second duration from an AN PSDB, a value less than the PSDB, a value less than the AN PSDB, a value less than or equal to the PSDB minus a PDB, a value less than or equal to the AN PSDB minus an AN PDB, and a value less than or equal to the AN PSDB minus the second duration;
and/or
the second threshold is one of the following: the first threshold, a maximum value of a time interval between a reception time of a packet in a packet set and a reception time of a first packet in the packet set, a value obtained by subtracting the first duration from an AN PSDB, a value obtained by subtracting the second duration from the AN PSDB, a value less than the PSDB, a value less than the AN PSDB, and a value less than or equal to the AN PSDB minus an AN PDB;
and/or
the first duration is one of the following: a minimum delay budget between a terminal and an anchor gateway for any packet in a packet set, a value obtained by subtracting the first threshold from the PSDB, a value obtained by subtracting the first threshold from an AN PSDB, a value obtained by subtracting the second threshold from the AN PSDB, a PDB, a value greater than or equal to the PDB, and a value greater than or equal to the PDB and less than or equal to the PSDB;
and/or
the second duration is one of the following: a minimum delay budget between a terminal and a radio access network RAN for any packet in a packet set, a value obtained by subtracting the first threshold from the PSDB, a value obtained by subtracting the first threshold from an AN PSDB, a value obtained by subtracting the second threshold from the AN PSDB, a value obtained by subtracting CN delay information from the first duration, an AN PDB, a value greater than or equal to the AN PDB, and a value greater than or equal to the AN PDB and less than or equal to the AN PSDB;
and/or
the first threshold is a maximum time interval corresponding to the PSDB and/or an AN PSDB;
and/or
the second threshold is a maximum time interval corresponding to an AN PSDB;
and/or
the first duration corresponds to the PSDB and/or an AN PSDB;
and/or
the second duration corresponds to an AN PSDB;
and/or
the first threshold is a maximum duration threshold for applying the PSDB and/or applying an AN PSDB;
and/or
the second threshold is a maximum duration threshold for applying an AN PSDB, wherein
the maximum time interval or the maximum duration threshold is a threshold for a maximum value of a time interval between a reception time of a packet in a packet set and a reception time of a first packet in the packet set.

31. The method according to any one of claims 18 to 30, wherein
the applying the PSDB comprises applying the PSDB that is mapped to the QoS identifier;
and/or
the not applying the PSDB comprises not applying the PSDB that is mapped to the QoS identifier.

32. An information processing method, comprising:
performing, by a fourth communication device, a fourth operation, wherein the fourth operation comprises one of the following:
obtaining third target information, and determining, based on the third target information, a QoS identifier corresponding to a service flow or a target policy;
not determining, based on the third target information, the QoS identifier corresponding to the service flow or the target policy;
not determining the QoS identifier based on a packet set error rate PSER;
not determining the QoS identifier based on packet set integrated handling information PSIHI; and
not determining the QoS identifier based on packet set importance (PDU set importance), wherein
the third target information comprises at least one of the following: a requested PSDB, a locally configured PSDB, a locally configured PSER, a locally configured PSIHI, and a first threshold; and
information mapped to the QoS identifier does not comprise the PSDB.

33. The method according to claim 32, wherein the not determining, based on the third target information, the QoS identifier corresponding to the service flow or the target policy comprises at least one of the following:
in a case that the third target information comprises the requested PSDB or the locally configured PSDB, and/or that it is determined to apply the PSDB, not determining, based on the requested PSDB or the locally configured PSDB, the QoS identifier corresponding to the service flow or the target policy;
in a case that the third target information comprises the PSER, and/or that it is determined to apply the PSER, not determining, based on the PSER, the QoS identifier corresponding to the service flow or the target policy; and
in a case that the third target information comprises the PSIHI, and/or that it is determined to apply the PSIHI, not determining, based on the PSIHI, the QoS identifier corresponding to the service flow or the target policy.

34. The method according to claim 32, wherein the not determining the QoS identifier based on a PSER comprises: in a case that the PSER is obtained, and/or that it is determined to apply the PSER, not determining the QoS identifier based on the PSER;
and/or
the not determining the QoS identifier based on PSIHI comprises: in a case that the PSIHI is obtained, and/or that it is determined to apply the PSIHI, not determining the QoS identifier based on the PSIHI.

35. A communication device, wherein the communication device is a first communication device and comprises:
a first execution module, configured to perform a first operation, wherein the first operation comprises at least one of the following:
applying at least one of the following to a quality of service QoS flow: a packet set delay budget PSDB, an access network AN PDSB, and a discard timer at a protocol data unit set PDU set level;
not applying at least one of the following to the QoS flow: the PSDB, the AN PDSB, and the discard timer at the PDU set level;
applying at least one of the following to the QoS flow: a packet delay budget PDB, an AN PDB, and a discard timer at a PDU level;
applying at least one of a PSDB and an AN PDSB that are mapped to a QoS identifier; and
not applying at least one of the PSDB and the AN PDSB that are mapped to the QoS identifier.

36. A communication device, wherein the communication device is a second communication device and comprises:
a second execution module, configured for the second communication device to perform a second operation, wherein the second operation comprises one of the following:
binding a QoS flow to a service flow or binding a QoS flow to a target rule;
sending or not sending first information;
determining that first information is present or absent in a context of the QoS flow;
determining that a PSDB information element is present or absent in the context of the QoS flow;
determining that a PSER information element is present or absent in the context of the QoS flow;
determining that a PSIHI information element is present or absent in the context of the QoS flow;
determining a value of first indication information corresponding to the QoS flow;
determining a value of second indication information corresponding to the QoS flow; and
determining a value of third indication information corresponding to the QoS flow, wherein
the first information is used to indicate applying a PSDB;
the first indication information is used to indicate one of the following: applying the PSDB and not applying the PSDB;
the second indication information is used to indicate one of the following: applying a PSER and not applying the PSER; and
the third indication information is used to indicate one of the following: applying PSIHI and not applying the PSIHI.

37. A communication device, wherein the communication device is a third communication device and comprises:
a third execution module, configured to perform a third operation, wherein the third operation comprises at least one of the following:
determining a QoS identifier;
sending second target information, wherein the second target information comprises at least one of the following: a first QoS identifier or a second QoS identifier, a PSDB, a PSER, PSIHI, first information, first indication information, second indication information, and third indication information, wherein the first indication information is used to indicate one of the following: applying the PSDB and not applying the PSDB; the second indication information is used to indicate one of the following: applying the PSER and not applying the PSER; and the third indication information is used to indicate one of the following: applying the PSIHI and not applying the PSIHI;
sending a target rule;
accepting or rejecting a requested PSDB, PSER, and/or PSIHI;
determining that one of the following is present or absent in the target rule: the PSDB and a QoS identifier whose mapping information comprises the PSDB;
determining that one of the following is present or absent in the target rule: the PSER and a QoS identifier whose mapping information comprises the PSER;
determining that one of the following is present or absent in the target rule: the PSIHI and a QoS identifier whose mapping information comprises the PSIHI;
performing a first sub-operation, or performing a second sub-operation;
sending or not sending the first information;
determining that the first information is present or absent in the target rule;
determining that a value of the first indication information is one of the following: a value used to indicate applying the PSDB, and a value used to indicate not applying the PSDB;
determining that the QoS identifier is one of the following: the first QoS identifier and the second QoS identifier;
sending or not sending the PSDB; and
determining that the PSDB is present or absent in the target rule, wherein
the first information is used to indicate applying the PSDB;
the first sub-operation comprises at least one of the following:
determining to apply the PSDB or to accept the requested PSDB;
determining that one of the following is present in a target policy: the PSDB, and the information comprising the PSDB mapped to the QoS identifier;
sending the first information, and/or determining that the first information is present in the target rule, wherein the first information is used to indicate applying the PSDB;
determining that the first indication information is the value used to indicate applying the PSDB;
determining that the QoS identifier is the first QoS identifier, wherein information mapped to the first QoS identifier comprises the PSDB; and
sending the PSDB, and/or determining that the PSDB is present in the target rule; and
the second sub-operation comprises at least one of the following:
determining not to apply the PSDB or to reject the requested PSDB;
determining that one of the following is absent in the target policy: the PSDB, and the information comprising the PSDB mapped to the QoS identifier;
not sending the first information, and/or determining that the first information is absent in the target rule, wherein the first information is used to indicate applying the PSDB;
determining that the value of the first indication information is the value used to indicate not applying the PSDB;
determining that the QoS identifier is the second QoS identifier, wherein information mapped to the second QoS identifier does not comprise the PSDB;
not sending a PSDB information element; and
determining that the PSDB information element is absent in the target rule.

38. A communication device, wherein the communication device is a fourth communication device and comprises:
a fourth execution module, configured to perform a fourth operation, wherein the fourth operation comprises one of the following:
obtaining third target information, and determining, based on the third target information, a QoS identifier corresponding to a service flow or a target policy;
not determining, based on the third target information, the QoS identifier corresponding to the service flow or the target policy;
not determining the QoS identifier based on a packet set error rate PSER;
not determining the QoS identifier based on packet set integrated handling information PSIHI; and
not determining the QoS identifier based on packet set importance, wherein
the third target information comprises at least one of the following: a requested PSDB, a locally configured PSDB, a locally configured PSER, a locally configured PSIHI, and a first threshold; and
information mapped to the QoS identifier does not comprise the PSDB.

39. A communication device, comprising a processor, a memory, and a computer program stored in the memory and capable of running on the processor, wherein when the computer program is executed by the processor, the steps of the information processing method according to any one of claims 1 to 10 are implemented, or the steps of the information processing method according to any one of claims 11 to 17 are implemented, or the steps of the information processing method according to any one of claims 18 to 31 are implemented, or the steps of the information processing method according to any one of claims 32 to 34 are implemented.

40. A computer-readable storage medium, wherein the computer-readable storage medium stores a computer program, and when the computer program is executed by the processor, the steps of the information processing method according to any one of claims 1 to 10 are implemented, or the steps of the information processing method according to any one of claims 11 to 17 are implemented, or the steps of the information processing method according to any one of claims 18 to 31 are implemented, or the steps of the information processing method according to any one of claims 32 to 34 are implemented.
